# EUROPÄISCHE PATENTSCHRIFT

(11) **EP 2 278 749 B1**
(45) Veröffentlichungstag und Bekanntmachung des Hinweises auf die Patenterteilung: **18.05.2016**
(21) Anmeldenummer: 10007044.0
(22) Anmeldetag: 08.07.2010
(51) Int. Cl.: H04L 7/00, G06F 1/06, H04L 7/04

(54) **Serielles Multi-Clock-Interface System**
Serial multi-clock interface system
Système d'interface série à multiples horloges

(30) Priorität: 09.07.2009 DE 102009032300
(43) Veröffentlichungstag der Anmeldung: 26.01.2011
(73) Patentinhaber: Hochschule Rhein Main University of Applied Sciences, 65197 Wiesbaden (DE)
(72) Erfinder: Indlekofer, Klaus Michael, Prof.Dr., 65474 Bischofsheim (DE)
(74) Vertreter: Weilnau, Carsten

(56) Entgegenhaltungen:
- DE-A1- 3 037 872
- US-A- 4 405 898
- US-B1- 6 563 358
- US-B1- 7 003 062

## Beschreibung

Die vorliegende Erfindung betrifft ein Verfahren und eine Einrichtung zur Übertragung und Synchronisation mehrerer Taktsignale unterschiedlicher Empfänger, die mit einer Sendeeinheit gekoppelt sind. Die Kopplung der empfangerseitigen Takt- oder Clock-Signale erfolgt hierbei zeitlich exakt über einen einzigen seriellen, binär-modulierten Übertragungskanal mit einem vom Sender generierten Übertragungs-Signal, welches insbesondere einen kontinuierlichen Bit-Stream aufweist.

### Hintergrund

Im Studio-Bereich, etwa für die Ton- und/oder Bildverarbeitung werden für die räumlich im jeweiligen Studio verteilt angeordneten Geräte mehrere unterschiedliche Taktsignale mit unterschiedlichen Clock- oder Taktfrequenzen *fi* benötigt. Zur notwendigen Synchronisation der Ton- und/oder Bildbearbeitungsgeräte werden Clock- oder Taktsignale für jede zwischen den Geräten zu übertragende Frequenz oder Frequenzgruppe typischerweise separat über jeweils eigene Schnittstellen, Interfaces bzw. Übertragungspfade übertragen, wie zum Beispiel Audio-World-Clocks, Black-Burst, SDI-Master-Clocks, LTC-Master-Clocks, Frame-Clocks, Line-Clocks, Color-Subcarrier-Clocks.

Den separat den einzelnen Geräten bereitzustellenden Clock-Signalen fehlt es oftmals an einer Frequenz- oder Phasenkopplung untereinander. Separate Clock-Signalleitungen oder Übertragungswege für jede einzelne Frequenz sind oft nicht verfügbar. Ohnehin wären sie nur mit wohl unverhältnismäßig großem Aufwand realisierbar. Sie wären zudem nicht skalierbar, da jede Frequenz *fi* eine separate Leitung und ggf. ein RE-Patching benötigt Auch wäre die Implementierung einer Vielzahl eigens vorzusehender Clock-Leitungen mitunter störanfällig.

Auch ein niederfrequenteres synchrones Interface mit festen Zeitslots für jedes *fi* im Zeit-Multiplex wäre keine sinnvolle Lösung, da sich die Auswahl verwendeter Frequenzen *fi* dynamisch ändern kann. Außerdem wäre durch die Teilung in Zeitslots die Auflösung des Rasters zeitlich entsprechend verschlechtert.

Auch eine Verwendung von LTC (Longitudinal Timecode) oder MTC (MIDI Timecode) oder Audio-Wordclocks als einzigem Taktsignal ist wegen der schlechten Zeitauflösung in der Regel für den vorgesehenen Anwendungszweck ungeeignet. Außerdem fehlen in diesen Fällen die benötigten studioweit absoluten Phasen-Informationen zu den jeweiligen Frequenzen *fi*.

So ist beispielsweise aus der US 4,099,205 ein Phasen-Kontrollsystem bekannt, welches eine Phasenkopplung verschiedener Synchronisationssignale ermöglicht. Zum Beispiel ist es hiermit möglich, die Phase verschiedener Fernsehsignale unterschiedlicher Synchronisationssysteme mit der Phase eines zentralen Synchronisationssignals in Übereinstimmung zu bringen. Jenes System ist jedoch auf die Synchronisation zweier TV-Signale beschränkt. Eine Adaption an eine Vielzahl, flexibel in eine Studio-Umgebung ein- oder auszukoppelnder Geräte ist hierbei nicht möglich.

So ist ferner aus der US 7,003,062 B1 ein Verfahren und ein System zur Synchronisierung von Prozessormodulen bekannt. Hierbei werden ein Master-Clock-Signal und zugeordnete Synchronisationsinformationen zur Koordinierung von Funktionen verwendet, die über Pakete in einem Synchronisationsstrom diktiert werden. Hierbei hat die Master-Clock mehrere Quellen und jedes Modul in dem System ist mit jeder Clock-Quelle verbunden, um eine Ausfallredundanz einzelner Module bereit zu stellen.

Ferner sind aus der US 4,405,898 zwei Systeme einer Synchronisationslogik mit unähnlichen maximalen Clock-Raten-Anforderungen bekannt, welche eine einzige Oszillationsquelle zur Ableitung pseudosynchroner Clock-Signale verwenden.

### Aufgabe

Der vorliegenden Erfindung liegt demgegenüber die Aufgabe zugrunde, ein universelles Multi-Clock-Schnittstellen-System bereitzustellen, welches dynamisch konfigurierbar und erweiterbar ist, und welches sich trotzdem durch eine möglichst einfache und kostengünstige Hardware-Implementierung auszeichnet. Die Synchronisation sämtlicher miteinander zu koppelnder Geräte soll hierbei mit nur einem Kommunikationskanal bereitgestellt werden. Sämtliche zu übertragende bzw. zu synchronisierende Clock-Signale sollen hinsichtlich ihrer Frequenz und Phase in exakten, deterministischen und/oder vorgegebenen Verhältnissen zueinander stehen. Auch soll sich das Interface- bzw. Synchronisationssystem und das hiermit zu durchzuführende Verfahren ferner durch eine Mindest-Fehlerredundanz bzw. Fehler-Toleranz auszeichnen.

### Erfindung

Die der Erfindung zugrundeliegende Aufgabe wird mittels eines Verfahrens zur Synchronisation von Taktsignalen gemäß Patentanspruch 1, einer Sendeeinheit gemäß Patentanspruch 6 sowie mit einem zugehörigen Empfänger nach Patentanspruch 10 und mit einer Synchronisationseinrichtung gemäß Patentanspruch 11 gelöst. Einzelne vorteilhafte Ausgestaltungen der Erfindung sind hierbei Gegenstand jeweils abhängiger Patentansprüche.

Das erfindungsgemäße Verfahren ist zur Synchronisation bzw. zur Kopplung von Taktsignalen zumindest zweier Empfänger mittels einer mit beiden Empfängern gekoppelten Sendeeinheit ausgebildet. Die Sendeeinheit ist hierbei mit beiden Empfängern zumindest unidirektional gekoppelt. Die Kopplung bzw. Datenübertragung von der Sendeeinheit zu den zumindest zwei Empfängern erfolgt hierbei bevorzugt über ein Übertragungs-Signal, aus welchem sich ein Master-Bit-Clock-Signal der *Frequenz fB* ableiten lässt. Das Master-Bit-Clock-Signal *fB* kann in der Sendeeinheit, z.B. im Rahmen eines Modulationsverfahrens zur Erzeugung des Übertragungs-Signals Verwendung finden und empfängerseitig, z.B. im Rahmen der Demodulation aus dem Übertragungs-Signal wiedergewonnen werden. Das Übertragungs-Signal weist ferner einen Datenstrom oder einen kontinuierlichen Bit-Stream auf, welcher bevorzugt mit der Master-Bit-Ctock-Frequenz getaktet ist. Der Bit-Stream zeichnet sich durch einen ununterbrochenen Datenstrom aus, welcher wahlweise ein oder mehrere zur Synchronisation der Empfänger ausgebildete Bit-Muster und zeitlich zwischengeschaltete Dummy-Bit-Muster enthält, wobei letztere der Aufrechterhaltung des Datenstroms und unter Umständen auch der fortwährenden Übertragung des Master-Bit-Clock-Signals dienen. Das Master-Bit-Clock-Signal der Frequenz *fB* kann insoweit in digitaler Codierung als auch in analoger Modulation im Übertragungs-Signal und/oder in seinem digitalen Datenstrom enthalten sein. Es ist bevorzugt im Übertragungs-Signal in dem Sinne "enthalten", als es sich aus letzterem bei einer Demodulation des Übertragungs-Signals eindeutig wiedergewinnen lässt. Das Übertragungssignal wird im Sinne der vorliegenden Erfindung auch als Multi-Clock-Signal bezeichnet.

Die Empfänger, welche als ton- und/oder bildverarbeitende Geräte oder Systeme ausgebildet sind oder in derartige Geräte oder Systeme integriert sind, zeichnen sich dadurch aus, dass sie auf der Basis des von der Sendeeinheit empfangenen Master-Bit-Clock-Signals und auf der Basis des Bit-Musters ein empfängerspezifisches, lokal auf den jeweiligen Empfänger bzw. sein zugeordnetes Gerät abgestimmtes Clock- oder Taktsignal erzeugen. Die Takt- oder Clock-Frequenzen von zumindest zwei Empfängern des Interface- oder Synchronisationssystems stehen hierbei in einem rationalen Verhältnis zur Master-Bit-Clock-Frequenz und somit auch in einem rationalen Verhältnis zueinander.

Das rationale Verhältnis von lokaler Clock-Frequenz *fi* und der systemweiten Master-Bit-Clock-Frequenz *fB* ist hierbei durch die Gleichung *fi =* (Zi/Ni) * *fB* gegeben, wobei Zi und Ni ganze Zahlen sind.

Ein zur Synchronisation bzw. Kopplung der Clock-Frequenzen mit der Master-Bit-Clock vorgesehenes Bit-Muster *xi* ist hierbei spezifisch für eine vorgegebene ganze Zahl Ni vorgesehen. Umgekehrt bedeutet dies, dass für eine Gruppe von Clock-Frequenzen *fi* mit gemeinsamem Ni zumindest ein Ni-spezifisches Bit-Muster *xi* erzeugt und zu einer von einem Scheduler vorgegebenen Zeit oder mit Erfüllen einer vorgegebenen Bedingung von der Sendeeinheit an sämtliche Empfänger versendet wird. Ein Ni-spezifisches Bit-Muster wird hierbei durch oder mit einem gemeinsamen Phasen-Nulldurchgang wenigstens eines Clock-Signals und des Master-Bit-Clock-Signals erzeugt und/oder versendet.

Mit Empfang des Ni-spezifischen Bit-Musters können sämtliche, einem entsprechenden Ni zugeordneten Empfänger jeweils die für sie individuell vorgesehenen Clock- oder Takt-Signale erzeugen, die mit der Master-Bit-Clock-Frequenz *fB* fortwährend fest gekoppelt sind. Neben einer eindeutigen und exakten Ableitung lokaler, ggf. unterschiedlicher Frequenzen aus einem gemeinsamen Bit-Muster *xi,* ermöglicht das Verfahren zudem eine Kopplung der Phasen der Clock-Signale zumindest zweier Empfänger zueinander. Folglich kann auch die Phasenbeziehung der Clock-Signale unterschiedlicher Empfänger deterministisch vorgegeben werden.

Die Anzahl an Empfängern kann hierbei nahezu beliebig groß sein. Sie sind vorzugsweise über eine Bus- und/oder Daisy-Chain-Topologie und/oder über eine übergeordnete Baum-Topologie mit optionalen Repeatern mit dem Sender gekoppelt. Wenngleich ein einziger Übertragungskanal zur Synchronisation und Kopplung sämtlicher Empfänger mit dem Sender und somit auch mittelbar der Sender untereinander prinzipiell ausreichend ist, kann der Übertragungskanal zur Erhöhung der Ausfall-Sicherheit auch redundant ausgeführt sein.

Es ist ferner vorgesehen, dass die Erzeugung und/oder das Versenden eines Ni-spezifischen Bit-Musters von einem gemeinsamen Phasen-Nulldurchgang wenigstens eines Clock-Signals und des Master-Bit-Clock-Signals getriggert wird. Bei Koinzidenz der Phasen eines einem Ni-zuordenbaren Clock-Signal-Phasen-Nulldurchgangs und eines Phasen-Nulldurchgangs des Master-Bit-Clock-Signals wird ein für die jeweilige Ni-Zahl vorgesehenes Bit-Muster *xi* an sämtliche Empfänger des Interface-Systems bzw. der Synchronisationseinrichtung versendet. Der Startzeitpunkt des jeweiligen Bit-Musters *xi* ist somit fest mit dem Phasen-Nulldurchgang zur Frequenz *fi* in einem durch das Master-Bit-Clock-Signal vorgegebenen Zeitraster gekoppelt.

Indem nicht zu allen Phasen-Nulldurchgängen einer Clock-Frequenz fi ein zugehöriges Bit-Muster gesendet wird, sondern nur bei einer Koinzidenz der Phasen-Nulldurchgänge des jeweiligen Clock-Signals mit dem Master-Bit-Clock-Signal erfolgt, kann zudem ein zeitliches Taktzittern der Clock-Signale, nämlich Jitter minimiert, wenn nicht sogar gänzlich beseitigt werden.

In vorteilhafter Weiterbildung der Erfindung ist ferner vorgesehen, dass das von der Sendeeinheit ausgesandte Übertragungs-Signal ein Master-Bit-Clock-Signal in Form einer selbsttaktenden Modulation enthält. Das Synchronisations- oder Interface-System verwendet einen selbsttaktenden Leitungscode z.B. mit einer Modulation nach einem der folgenden Verfahren: ASK, PSK, FSK, Biphase-Mark Code, Manchester oder auch NRZ, bzw. NRZI mit einem Master-Bit-Clock-Signal im Frequenzbereich von z.B. 10MHz, 27MHz, oder 270MHz. Hierbei können auch Lauflängenbeschränkungen zur Erzielung der Selbsttaktung verwirklicht werden.

Jeder Empfänger kann hierbei das Master-Bit-Clock-Signal der Frequenz *fB* unmittelbar und präzise, z.B. PLL-phasen-verkoppelt mit dem Sender lokal regenerieren. Die Empfänger sind ferner dazu ausgebildet, ausgehend vom Master-Bit-Clock-Signal jeweils eigene Clock-Signale unterschiedlicher Frequenzen *fi*=(Zi/Ni)**fB* (i=1,...,M) zu erzeugen. Das heißt, Ni Takte der Dauer TB=1/*fB* sind exakt gleich Zi Takten der Dauer Ti=1/fi. Dabei sind Zi und Ni positive ganze Zahlen, die vorzugsweise aber nicht notwendigerweise teilerfremd zueinander sind.

Via Teiler- und/oder Vervielfacher-Module oder mittels Phase-Locked-Loop (PLL) oder Direct Digital Synthesizer (DDS) lässt sich die jeweilge fi- Frequenz exakt aus der Master-Frequenz fB im Empfänger generieren, allerdings fehlt dabei i.a. die absolute Phaseninformation, insbesondere kann sich eine unerwünschte Streuung der Phasen mehrerer Empfänger untereinander ergeben. Die absolute Phase lässt sich mit der erfindungsgemäßen Lösung für alle Empfänger in derselben Weise rekonstruieren, selbst mit nur einem einzelnen seriellen binär-modulierten Übertragungskanal ohne zusätzliche Kanäle bzw. Leitungen und ohne einen gemeinsamen Start-Reset.

So wird im *fB*-getakteten Bit-Stream vom Sender default-mäßig ein Dummy-Bit-Pattern generiert, das mit keinem anderen verwendeten Bit-Muster *xi* zu verwechseln ist. Zu geeigneten Zeitpunkten des Master-Bit-Clock-Signals generiert der Sender einzelne Bit-Patterns xi[k] (i=1,...M) der Länge L (mit Bit-Adresse k=0,...,(L-1)), die jeweils den einzelnen zu erzeugenden Frequenzen *fi* (i=1,...M) eineindeutig als sog. Code-Fingerprint zugeordnet sind.

Nach einer weiteren bevorzugten Ausgestaltung werden die Empfänger ausschließlich durch eine unidirektionale Kopplung mit der zumindest einen Sendeeinheit gekoppelt bzw. synchronisiert. Das heißt, die Datenübertragung von der Sendeeinheit zum Empfänger erfolgt rückkopplungsfrei. Es werden folglich keine Signale der Empfänger zurück an die Sendeeinheit übertragen. Auch sind die Empfänger ausschließlich mittelbar über die Sendeeinheit, nicht aber unmittelbar untereinander gekoppelt.

In vorteilhafter Weiterbildung der Erfindung ist ferner vorgesehen, dass für gerätespezifisch vorgegebene Clock-Frequenzen eine Zahl Ni, etwa durch Primfaktorzerlegung der beiden Clock-Frequenzen berechnet wird. Je nach Anzahl der mit der Sendeeinheit zu koppelnden Empfänger und der hierfür jeweils vorgesehenen Clock-Frequenzen kann es sich nach einer weiteren vorteilhaften Ausgestaltung auch als vorteilhaft erweisen, die Clock-Frequenzen unterschiedlicher Empfänger in Frequenz-Gruppen zu unterteilen, für welche jeweils eine Zahl Ni bestimmt wird. Für jede Frequenzgruppe wird dann ein gruppenspezifisches Bit-Muster erzeugt und systemweit versendet.

Insoweit ist in weiterer vorteilhafter Ausgestaltung vorzusehen, dass auf einem einzigen, die Sendeeinheit mit sämtlichen Empfängern koppelnden Übertragungskanal verschiedene, jeweils mit gesonderter Zahl Ni versehene Gruppen von Bitmustern *xi* übertragen werden. Das Versenden der jeweils Ni-spezifischen Bit-Muster *xi* erfolgt hierbei selbsttätig von der Sendeeinheit und wird nicht etwa durch einzelne Empfänger von der Sendeeinheit angefordert. Die Ni-spezifischen Bit-Muster werden beispielsweise über eine Arbitrationseinheit, einen sog. Scheduler ausgewählt. Die einzelnen, jeweils für eine Gruppe von Clock-Frequenzen *fi* vorgesehenen Bit-Muster können beispielsweise mit einer Priorität versehen werden, wobei die Arbitrationseinheit in zeitlicher Abfolge sukzessive jeweils dasjenige Bit-Muster höchster Priorität versendet. Das heißt, das Aussenden eines Synchronisations-Bit-Musters *xi* erfordert die Koinzidenz der Phasen-Nulldurchgänge eines zugehörigen Clock-Signals mit dem Master-Bit-Clock-Signal und einer ausreichend hohen Priorität für das jeweils auszusendende Ni-spezifische Bit-Muster *xi.*

Da *fi*=(Zi/Ni)*fB gilt, kann das Bit-Pattern *xi* im günstigsten Fall nur alle Ni Master-Bit-Clock-Takte gesendet werden was einer Mindest-Wiederholdauer von Ni*TB=Ni/fB entspricht. Wenn die Länge der Bit-Patterns L beträgt, erfordert das vollständige Versenden des Patterns sowieso L Master-Bitclocks. Unter allen konkurrierenden Clock-Signalen, die zu ausgewählten Zeiten einen gemeinsamen Phasen-Nulldurchgang aufweisen trifft eine Arbitrations- oder Scheduler-Logik nach vorgegebenem Algorithmus eine Auswahl, wobei keine zu langen Auslassungs-Zeiten für jede infrage kommende Bit-Clock-Frequenz auftreten sollen.

Bei einer über einem vorgegebenen Schwellwert liegenden Priorität eines Clock-Signals, kann der Sender einen gerade stattfindenden Versand eines anderes Bit-Patterns vorzeitig abbrechen oder zerstören. Hierdurch kann ein zeitliches Raster des Startzeitpunktes eines Bit-Patterns vorteilhaft durch die Periodendauer TB=1/fB der Master-Bitclock vorgegeben werden. Die richtigen Zeitpunkte der gemeinsamen Nulldurchgänge von *fi* und *fB* werden im Sender durch Teiler 1:Ni aus *fB* frequenz-mäßig exakt und phasen-mäßig starr verkoppelt gewonnen

In einem weiteren nebengeordneten Aspekt betrifft die Erfindung ferner eine Sendeeinheit für eine zuvor beschriebene Synchronisationseinrichtung. Sie ist insbesondere dazu ausgebildet ist, ein Master-Bit-Clock-Signal und wenigstens ein Clock-Frequenz-spezifisches Bitmuster über eineinziges Übertragungs-Signal an wenigstens zwei Empfänger, welche mit der Sendeeinheit gekoppelt sind zur Erzeugung Empfänger-spezifischer Clock-Signale unterschiedlicher Frequenz zu senden. Die Frequenzen der Clock-Signale der zumindest zwei Empfänger stehen dabei in einem rationalen Verhältnis *fi*=(Zi/Ni) * *fB* zueinander bzw. zur Frequenz des Master-Bit-Clock-Signals. Das wenigstens eine Bitmuster ist hierbei einer Gruppe von Clock-Signalen unterschiedlicher Clock-Frequenz aber gleichem Ni zugeordnet.

Das jeweilige Ni-spezifische Bit-Muster *xi* wird ferner bei Auftreten einer Koinzidenz der Phasen-Nulldurchgänge wenigstens eines Clock-Signals und des Master-Bit-Clock-Signals versendet. Das Versenden des Bit-Musters kann hierbei auch zeitlich versetzt, etwa entsprechend einem vorgegebenen Offset, zur Koinzidenz der Phasen-Nulldurchgänge erfolgen.

Die Erzeugung und/oder das Versenden eines Ni-spezifischen Bit-Musters wird nach einer weiteren bevorzugten Ausgestaltung der Sendeeinheit selbsttätig von dieser getriggert. Somit wird eine Rückkopplung der Empfänger zum Sender überflüssig. Nach einer weiteren bevorzugten Ausgestaltung ist ferner vorgesehen, dass die Sendeeinheit mehrere, jeweils für unterschiedliche Ni vorgesehene Bit-Muster zeitlich versetzt zueinander versenden kann und/oder entsprechend einer vorgegebenen Arbitrationslogik das Versenden eines Bit-Musters zugunsten eines anderen Bit-Musters unterbricht. Eine Arbitrations- oder Scheduler-Logik kann hierbei beispielsweise vorsehen, dass jeweils das Bit-Muster versendet wird, welches die längste Wartezeit sämtlicher infrage kommender Bit-Muster aufweist.

Nach einer weiteren bevorzugten Ausgestaltung der Sendeeinheit ist ferner vorgesehen, dass diese ein Speichermodul zum Abspeichern eines eine Sequenz an Bit-Mustern aufweisenden Datenstroms aufweist. Ferner weist die Sendeeinheit ein Wiedergabemodul auf, welches zum periodisch wiederkehrenden Abspielen und Senden des gespeicherten Datenstroms zur Erzeugung und zum Senden eines Multi-Clock-Taktsignals an die zumindest zwei Empfänger ausgebildet ist. Die Berechnung und Erzeugung der Bit-Muster kann hierbei extern, etwa mittels eines Computers oder dergleichen rechnergestützten Einrichtung für jeweils eine vorgegebene Auswahl von Empfängern und zugehörigen Clock-Signalen erfolgen.

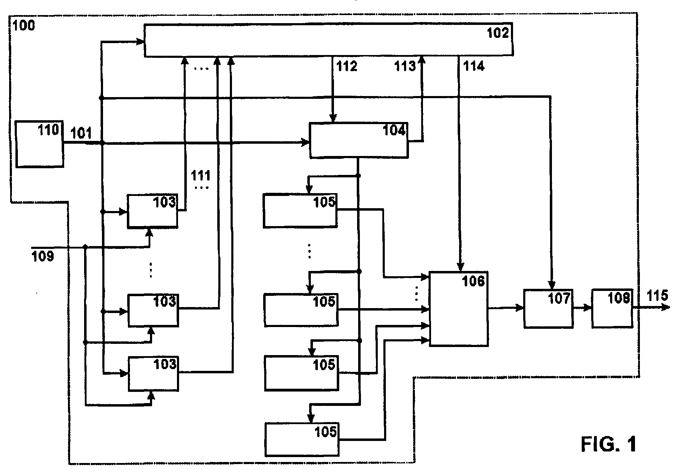

Der Inhalt des Speichermoduls kann eine oder mehrere Gesamt-Perioden eines Bitstreams - oder Informationen zur Konstruktion eines solchen - enthalten, der nach Art einer virtuellen Implementierung gemäß des beschriebenen Sender-Prinzips gemäß Fig.1 erzeugt würde. Bei gewählter Teilmenge der zu sendenden Ni, ist die Gesamt-Bitstream-Periode ein ganzzahliges Vielfaches des kleinsten gemeinsamen Vielfachen (kgV) aller beteiligten Ni mal TB.

In einem weiteren unabhängigen Aspekt betrifft die Erfindung ferner einen Empfänger für die zuvor beschriebene Sendeeinheit. Der Empfänger ist erfindungsgemäß dazu ausgebildet, sowohl ein Master-Bit-Clock-Signal als auch ein clock-frequenz-spezifisches Bit-Muster von einer Sendeeinheit zu empfangen und entsprechend der über das Bit-Muster übermittelten Daten ein empfängerspezifisches Clock-Signal zu erzeugen. Die Frequenz des Clock-Signals fi steht dabei in einem rationalen Verhältnis zur Frequenz des Master-Bit-Clock-Signals. Alternativ oder ergänzend ist ferner vorgesehen, dass die Phase des empfängerspezifischen Clock-Signals in einer deterministischen, fest vorgegebenen und nach erfolgter Kopplung von Sender und Empfänger in einer unveränderlichen Phasen-Beziehung zum Master-Bit-Clock-Signal steht.

Mit Eintreffen eines Bit-Musters beim Empfänger, setzt dieser die Phase des empfängerspezifischen Clock-Signals etwa auf Null oder auf einen vorgegebenen Soll-Wert. Mit der fortwährenden Kopplung über das Master-Bit-Clock-Signal verbleiben die Phasenlagen sämtlicher Clock-Signale unterschiedlicher Empfänger in einem deterministischen und/oder vorgegebenen Verhältnis zum Master-Bit-Clock-Signal.

In einem weiteren, nebengeordneten Aspekt betrifft die Erfindung ferner eine als Interface-System ausgebildete Synchronisationseinrichtung zur Kopplung mehrerer ton- und/oder bildverarbeitender Geräte untereinander, die in einem Studio-Umfeld miteinander interagieren. Die Synchronisationseinrichtung weist wenigstens eine Sendeeinheit und wenigstens zwei hiermit jeweils unidirektional gekoppelte Empfänger auf. Die Sendeeinheit ist dabei ferner zum Senden sowohl eines von sämtlichen Empfängern zu empfangenden, ein Master-Bit-Clock-Signal aufweisenden Übertragungs-Signals und zum Senden wenigstens eines Bit-Musters ausgebildet. Aus dem Master-Bit-Clock-Signal und dem Bit-Muster kann seitens der Empfänger ein empfängerspezifisches Clock-Signal generiert werden.

Die Frequenzen der Clock-Signale der zumindest zwei Empfänger stehen dabei in einem rationalen Verhältnis zur Frequenz des Master-Bit-Clock-Signals und somit auch in einem rationalen Verhältnis zueinander, wobei folgende Beziehung gilt: *fi =* (Zi/Ni) * *fB* mit *fB* als Frequenz des Master-Bit-Clock-Signals und Zi sowie Ni als ganzen Zahlen. Das zur Synchronisation vorgesehene Bit-Muster ist hierbei jeweils einer Gruppe von Clock-Signalen unterschiedlicher Clock-Frequenz, aber gleichem Ni zugeordnet, wobei die Empfänger dazu ausgebildet sind, die Frequenz und/oder die Phasenlage ihres jeweils zugeordneten Clock-Signals eindeutig aus dem Master-Bit-Clock-Signal und dem Ni-spezifischen Bit-Muster zu reproduzieren.

Insgesamt ist die Synchronisationseinrichtung dazu ausgebildet, das vorbeschriebene erfindungsgemäße Verfahren auszuführen. Die Datenübertragung bzw. Kommunikation zwischen Sendeeinheit und sämtlichen Empfängern erfolgt insoweit über einen kontinuierlichen Datenstrom. Dieser Datenstrom ist in Form einer selbsttaktenden Modulation unter Verwendung des Master-Bit-Clock-Signals als Modulations-Takt im Übertragungs-Signal enthalten.

In Weiterbildung hiervon ist ferner vorgesehen, dass jeder Empfänger nach Empfang und/oder Verarbeitung eines für ihn vorgesehenen Bit-Musters *xi* ein mit dem Master-Bit-Clock-Signal frequenz- oder phasengekoppeltes Clock-Signal aufweist. Da die lokal empfängerseitig zu generierenden, individuell für die Empfänger vorgesehenen Clock-Signale sämtlichst aus dem Master-Bit-Clock-Signal abgeleitet werden und das Master-Bit-Clock-Signal fortwährend und unterbrechungsfrei vom Sender an die Empfänger übertragen wird, bleiben die unterschiedlichen Clock-Signale der einzelnen Empfänger zeitlich mit dem Master-Bit-Clock-Signal gekoppelt.

Für die Auswahl an Empfängern und zugehörige Clock-Signale kann sodann ein einziger Datenstrom berechnet werden, der zumindest eine ausreichende Anzahl - auf die jeweilige Konfiguration der Empfänger und zugehöriger Clock-Frequenzen konfigurierte - Bit-Muster in vorgegebener Abfolge enthält. Der im Speichermodul abzuspeichernde Datenstrom, bzw. ein zugehöriges, den Datenstrom enthaltendes Übertragungs-Signal ist hierbei derart auszubilden, dass jedes der infrage kommenden Bit-Muster zumindest einmal innerhalb einer Periode gesendet wird. Das Wiedergabemodul kann hierbei beispielsweise als Sample-Player ausgebildet sein, der ausschließlich dazu in der Lage ist, den im Speichermodul abgelegten Datenstrom periodisch wiederkehrend abzuspielen.

Die Implementierung einer Fehlerredundanz oder Fehtertoleranz für die Datenübertragung zwischen Sendeeinheit und Empfängern stellt an die Konstruktion der Bit-Muster und der Dummy-Bit-Muster gewisse Anforderungen. Hierdurch soll ein sogenannter falscher Match, nämlich das Erkennen eines Bit-Musters im Empfänger ohne die kausal zugehörige Aussendung dieses Musters durch den Sender ausgeschlossen werden. Die Bit-Muster und die zwischengeschalteten Dummy-Bit-Muster sind derart zu wählen, dass unter keinem der nachfolgen angegebenen Umstände falsche Matches entstehen:
- bei ungestörtem Kanal,
- bis zu einer vorgegebenen Anzahl oder Dichte an Bit-Übertragungsfehlern,
- bei einem beliebigen vorzeitigen Abbrechen des Bit-Muster-Versands,
- bei beliebigem Überschreiben eines Bit-Musters im Sender oder
- bei längerem Ausfall des Kanals.

Ein Nicht-Erkennen oder Verwerfen eines vom Sender tatsächlich gesendeten Bit-Musters *xi* führt hingegen zu keinem falschen Match und ist daher akzeptabel.

Entsprechend der vorgesehenen Bit-Fehler-Toleranz kann ein Empfänger ein im Versand vorzeitig abgebrochenes Bit-Muster *xi* zum richtigen Master-Bit-Clock-Takt erkennen. Unter Umständen ist ferner denkbar, dass selbst ein nach einem Überschreiben übriggebliebenes Rest-Fragment eines Bit-Musters *xi* korrekt und ohne Zeitfehler erkannt wird. Aus diesem Anforderungsprofil ergeben sich die nachfolgenden Bedingungen zur Erstellung der Bit-Muster *xi*:
- unterschiedliche Bit-Muster oder Bit-Pattern dürfen paarweise untereinander keinen Match aufweisen;
- Bit-Muster dürfen nur nach Verschiebung mit sich selbst keinen Match aufweisen;
- Bitfehler-erkennende, ggf. Bitfehler-korrigierende Muster-Erkenner erfor dern Bit-Muster mit vorgegebener Hamming-Distanz untereinander und beliebig gegeneinander verschobene und beliebigen Vorgänger-xi oder Nachfolger-xi. Im Falle einer NRZ- oder NRZI-Kodierung als Leitungscode sollten die Bit-Muster einen vorgegebenen maximalen Abstand von Eins- und Null-Bits, bzw. Eins-Bits nicht überschreiten, damit der Leitungscode selbsttaktend bleibt;
- eine beliebige Folge von abgebrochen-gesendeten Bit-Mustem darf zusammen mit dem Anfang eines nachfolgenden Bit-Musters *xi* kein gültiges Bit-Muster *xj* ergeben,
- eine beliebige Folge von Rest-Fragmenten gesendeter Bit-Muster darf zusammen mit dem Ende eines Vorgänger-Bit-Musters xi kein gültiges Bit-Muster xj ergeben;

Sämtliche Bedingungen gelten sowohl für vollständige Bit-Muster als auch für einzelne Fragmente oder Überbleibsel von Bit-Mustern, deren Aussenden durch andere Bit-Muster unterbrochen wurde.

Aufbau eines Bit-Pattern:
1. beginne mit Bit-Sequenz ("head"), die eine große Hammingdistanz zu allen anderen irgendwo auftretenden Mustern hat (insbes. gegen Match bei Rest-Fragmenten).
2. gefolgt von Bit-Sequenz ("Mittelteil") bestehend aus redundant codierter Information (inkl. Fehlerschutz) zu Frequenz *fi* bzw. *Ni,*
3. ende mit Bit-Sequenz ("tail"), die große Hammingdistanz zu allen anderen irgendwo auftretenden Mustern hat (insbes. gegen Match bei Abbruch).

Der Fehlerschutz der Code-Bits kann die Möglichkeit zur Vorwärts-Fehlerkorrektur beinhalten (FEC) oder auch lediglich zur Fehlererkennung, z.B. zwecks Verwerfung des Musters *xi* dienen. Zur Anwendung können insbesondere lineare Blockcodes kommen, z.B. Parity-Bits, CRCs, Reed-Solomon-Codes, BCH-Codes und/oder Faltungscodes. Die Hamming-Distanz bezeichnet in diesem Zusammenhang die Anzahl der Bits, in denen sich zwei Bitmuster unterscheiden. Eine große Hamming-Distanz im Sinne der Erfindung ist hierbei relativ zur Bit-Error-Rate (BER) zu sehen. Die Hamming-Distanz ist derart zu wählen, entweder zu berechnen oder experimentell oder durch Simulation zu bestimmen, dass bei einer gegebenen maximalen BER die gewünschte Obergrenze der Wahrscheinlichkeit eines Fehl-Matches unterschritten wird. Bei einer BER=0 wäre sogar Hamming-Distanz=1 tolerierbar.

Alternativ zu obiger Konstruktion können evtl. auch Bit-Patterns Verwendung finden, die aus Pseudo-Noise-Sequenzen oder durch Scrambling entstanden sind.

Als Erweiterung lassen sich zur codierten Information zu Frequenzen *fi* optional zusätzlich auch noch User-Bits und/oder Timecode-Bits innerhalb der Bit-Patterns vorsehen, die dann aber vom Muster-Erkenner ignoriert werden und einer eigenen FEC bedürfen. Diese User- und Timecode-Bits werden separat generiert, ggf. außerhalb des Senders.

Die Länge der Bit-Patterns muss ausreichend groß gewählt werden, um unterschiedliche *fi* (bzw. Ni) und große Hamming-Distanz zu ermöglichen. Vorteilhaft für den Bit-Adress-Generator sind Längen der Form L=2^n (z.B. 32, 64, 128, oder 256 bits). Größere Längen L ermöglichen größere M und mehr Redundanz für Fehlerschutz (d.h. größere Hamming-Distanzen). Kleinere Längen L dagegen ermöglichen eine einfachere Hardware, eine größere Wiederholrate und evtl. eine höhere Fehlerrate bei derselben Anzahl an korrigierbaren Bits pro Pattern, allerdings bei wesentlich kleinerem M.
Bit-Pattem Ausführungsbeispiel 1:
   Bit-Pattern Länge L=32bits, Match-Schwelle = L (d.h. nicht korrigierend)
   x = 1 1 1 0 1 1 f0 not(f0) f1 not(f1) f2 not(f2) f3 not(f3) f4 not(f4) f5 not(f5) f6 not(f6) f7 not(f7) f8 not(f8) g0 not(g0) 0 0 1 0 0 0
   mit f0,f1,f2,f3,f4,f5,f6,f7,f8 = 9bit Code für Dummy und 511 verschiedene fi und Parity-Bit (^=Exklusiv-Oder)
   g0 = f0 ^ f1 ^ f2 ^ f3 ^ f4 ^ f5 ^ f6 ^ f7 ^ f8
Bit-Pattem Ausführungsbeispiel 2:
   Bit-Pattem Länge L=128bits, Match-Schwelle = L-2 (2 Bitfehler pro Bit-Pattern korrigierend)
   x = 1 1 1 1 1 1 0 1 1 1 1 1 0 1 1 1 1 0 1 1 1 0 1 f0 not(f0) f1 not(f1) f2 not(f2) f3 not(f3) f4 not(f4) f5 not(f5) f6 not(f6) f7 not(f7) f8 not(f8) f9 not(f9) fa not(fa) fb not(fb) fc not(fc) fd not(fd) fe not(fe) ff not(ff) g0 not(g0) g1 not(g1) g2 not(g2) g3 not(g3) g4 not(g4) g5 not(g5) g6 not(g6) g7 not(g7) g8 not(g8) u0 not(u0) u1 not(u1) u2 not(u2) u3 not(u3) u4 not(u4) u5 not(u5) u6 not(u6) u7 not(u7) u8 v0 not(v0) v1 not(v1) v2 not(v2) v3 not(v3) v4 not(v4) v5 not(v5) v6 not(v6) 0 1 0 0 0 1 0 0 0 0 1 0 0 0 0 0 1 0 0 0 0 0 0
   mit f0,f1,f2,f3,f4,f5,f6,f7,f8,f9,fa,fb,fc,fd,fe,ff = 16bit Code für Dummy und 65535 verschiedene fi
      und Parity-Bits (^=Exklusiv-Oder)
      g0=f0^f1^f2^f3
      g1=f4^f5^f6^f7
      g2=f8^f9^fa^fb
      g3=fc^fd^fe^ff
      g4=f0^f4^f8^fc
      g5=f1^f5^f9^fd
      g6=f2^f6^fa^fe
      g7=f3^f7^fb^ff
      g8=g0^g1^g2^g3
   mit u0,u1,u2,u3,u4,u5,u6,u7,u8 = 9bit Code für Userbits/Timecode
      und Parity-Bits (^=Exklusiv-Oder)
      v0 =u0^u1 ^u2
      v1=u3^u4^u5
      v2=u6^u7^u8
      v3=u0^u3^u6
      v4=u1^u4^u7
      v5=u2^u5^u8
      v6=v0^v1 ^v2

Die Bits u,not(u),v,not(v) werden vom Muster-Erkenner ignoriert und müssen separat decodiert + korrigiert (z.B. gemäß Minimum-Hamming-Distance bzw. Maximurn-Likelyhood) werden. Die Userbits/Timecode-Bits sind nur gültig bei Match der übrigen Bits, und deren Bedeutung hängt von den f,g Bits ab, z.B.:

| | |
|---|---|
| f = 0 (Dummy) | => u0...8 = Userbits0...8 |
| f = 1...65531 (fi) | => u0...8 = Usertbits0...8 |
| f = 65532 | => u0...8 = Bits0...8 der Systemzeit |
| f = 65533 | => u0...8 = Bits9...17 der Systemzeit |
| f = 65534 | => u0...8 = Bits18...26 der Systemzeit |
| f = 65535 | => u0...4 = Bits27...31 der Systemzeit |
| | u5...8 = Status/Control/Reserve |

Die aktuellen 9 Userbits werden mit jedem f=0...65531 übertragen ("unregelmäßig gesampled"). Bei ausreichender Wiederholrate kann man dort auch MIDI, LTC, serielles Interface (RS232, RS422 "9-pein"), etc in jedem Bit übertragen.

Die Systemzeit wird im Sekunden-Takt inkrementiert (z.B. identisch mit "time()") und wird über f=65532...65535 zyklisch mit 4Hz Rate gesendet. Der Wert gilt genau zum Zeitpunkt des f=65532 der gesendeten Zeit. Bei Pattern-Verlusten, Kanal-Störungen und/oder Pattern-Abbrüchen muss der Empfänger die Systemzeit interpolieren/extrapolieren durch internes Weiterzählen, etwa abgeleitet aus regeneriertem Master-Bitclock-Takt *fB*.

Das Frequenzspektrum der infrage kommenden Clock-Frequenzen ist nahezu unbegrenzt, es erstreckt sich auf die folgenden Anwendungsbereiche: Audio-, Video- und Mediensysteme, Synchronisation von Aufzeichnungs- und Wiedergabe-Systeme, Kino, Ton- und Fernseh-Rundfunk, sowohl im Innen- als auch Außen-Einsatz, Studios, Konzerte und Aufführungen, Kammerton für Musik-Anwendungen, Computer-Netzwerke (LAN, WAN), Telekommunikation, Mobilfunk, energietechnische Systeme.

Die folgende Liste enthält auch historisch-relevante Frequenzen, die für Konvertierungs- oder Experimentier-Zwecke, etwa für Archivmaterial immer noch von Interesse sein könnten.

Bei einer Master-Bit-Clock-Frequenz von z.B. fB=270MHz können z.B. die folgenden, nicht abschließend und lediglich beispielhaft angegebenen *fi*-ClockFrequenzen exakt mit den jeweils angegebenen Werten für Zi,Ni, erzeugt werden, wobei die angegebenen Zi, Ni kleinstmöglich gewählt wurden und noch skaliert werden können:

| | | | |
|---|---|---|---|
| f=6.25Hz | Z=1 | N=43200000 | (für PAL 8V-Seq.) |
| f=12.5Hz | Z=1 | N=21600000 | (für PAL 4V-Seq.) |
| f=15Hz*1000/1001 | Z=1 | N=18018000 | (für NTSC 4V-Seq.) |
| f=(33+1/3)Hz | Z=1 | N=8100000 | (z.B. Schallplatte) |
| f=45Hz | Z=1 | N=6000000 | (z.B. Schallplatte) |
| f=415Hz | Z=83 | N=54000000 | (z.B. Kammerton) |
| f=440Hz*1000/1001 | Z=1 | N=61425 | (z.B. Kammerton) |
| f=440Hz | Z=11 | N=6750000 | (z.B. Kammerton) |
| | | | |
| f=1920Hz | Z=1 | N=140625 | (24fps LTC-Bitclock) |
| f=7812.5Hz | Z=1 | N=34560 | (für PAL 2H-Seq.) |
| f=11025Hz | Z=49 | N=1200000 | (=fH 441 Zeilen TV, D) |
| | | | |
| f=19kHz | Z=19 | N=270000 | (für UKW FM MPX) |
| f=38kHz | Z=19 | N=135000 | (für UKW FM MPX) |
| f=57kHz | Z=19 | N=90000 | (für UKW FM RDS) |
| f=76kHz | Z=19 | N=67500 | (für UKW FM RDS) |
| f=54.6875kHz | Z=7 | N=34560 | (für TV Pilotton) |

Audio-Wordclocks etc.:

| | | |
|---|---|---|
| f=44.1kHz*24000/25025 | Z=14 | N=89375 |
| f=44.1kHz*24/25 | Z=49 | N=31250 |
| f=44.1kHz*24024/25000 | Z=49049 | N=312500000 |
| f=44.1kHz*1000/1001 | Z=7 | N=42900 |
| f=44.1 kHz | Z=49 | N=300000 |
| f=48kHz*24000/25025 | Z=64 | N=375375 |
| f=48kHz*24/25 | Z=8 | N=46875 |
| f=48kHz*24024/25000 | Z=1001 | N=585937 |
| f=48kHz*1000/1001 | Z=8 | N=45045 |
| f=48kHz | Z=1 | N=5625, |

sowie weitere auf diesen Audio-Sampleraten basierende Frequenzen, die durch ganzzahlige Faktoren und/oder ganzzahlige Teiler aus diesen erhältlich sind. Desweiteren sind in ähnlicher Weise andere Audiosampleraten möglich, beispielsweise basierend auf 32kHz.

Telekommunikation, Netzwerke etc.:

| | | | |
|---|---|---|---|
| f=8kHz | Z=1 | N=33750 | |
| f=1.024MHz | Z=64 | N=16875 | |
| f=44.736MHz | Z=932 | N=5625 | |
| f=100MHz | Z=10 | N=27 | |
| f=125MHz | Z=25 | N=54 | (z.B. FDDI, MADI) |

Mobilfunk etc.:

| | | | |
|---|---|---|---|
| f=(216+2/3)Hz | Z=13 | N=16200000 | (für GSM) |
| f=(270833+1/3)Hz | Z=13 | N=12960 | (für GSM) |
| f=1500Hz | Z=1 | N=180000 | (für UMTS) |
| f=3.84MHz | Z=16 | N=1125 | (für UMTS) |
| f=1.152MHz | Z=8 | N=1875 | (für DECT) |
| f=NTSC M fSC | Z=21227 | N=1600000 | (=3582056.25Hz) |
| f=PAL B fSC | Z=709379 | N=43200000 | (=4433618.75Hz) |
| f=SECAM Blue fSC | Z=11 | N=1080 | (=4250000Hz) |
| f=SECAM Red fSC | Z=47 | N=2880 | (=4406250Hz) |

sowie weiteren Frequenzen, die als Hilfsträger in Femsehsystemen und analogen Video-Recorder-Systemen Verwendung finden, insbesondere nach dem Color-Under-Verfahren.

Digitale Videosysteme etc. (z.B. MPEG, SDI, HD-SDI, 3G-SDI):

| | | | |
|---|---|---|---|
| f=90kHz | Z=1 | N=3000 | |
| f=14.328225MHz | Z=21227 | N=400000 | (=4*NTSC M fSC) |
| f=17.734475MHz | Z=709379 | N=10800000 | (=4*PAL B fSC) |
| f=18MHz | Z=1 | N=15 | |
| f=74.25MHz*1000/1001 | Z=25 | N=91 | |
| f=74.25MHz | Z=11 | N=40 | |
| f=148.5MHz*1000/1001 | Z=50 | N=91 | |
| f=148.5MHz | Z=11 | N=20 | |
| f=270MHz | Z=1 | N=1. | |

Es sind auch Frequenzen fi für "falschen Pull-Down-Rates" exakt möglich, was Kompatibilität zu Systemen und Konvertierung von Medien ermöglicht, die mit derartigen nicht standard-konformen Frequenzen behaftet sind oder auf solchen basieren, etwa weil sie willentlich oder durch technische Unzulänglichkeiten der letzteren entstanden sind. Falsche Pull-down Rates entstehen beispielsweise durch Verwendung des Faktors 999/1000 anstelle von 1000/1001.

Alle aufgeführten Ni sind < 2³⁰ = 1073741824. Bei Verwendung eines phase-scaling DDS "scaledds" erlaubt dies eine Phasen-Accumulator-Größe von NP=30bit. Außerdem ist die längste prinzipielle Minimal-Wiederholdauer Ni*TB < 4s.

Die Werte für Zi, Ni beispielsweise zu fB=10MHz oder 27MHz werden durch Skalieren aller obiger Zi, Ni konstruiert.

Bemerkung: Soll ein *fi* aus fB gemäß DDS im Empfänger konstruiert werden, so muss das Nyquist-Kriterium gelten *fi* < *fB*/2. Anderenfalls wird eine PLL oder ein Vervielfacher erforderlich.

### Ausführungsbeispiele

Weitere Ziele, Merkmale sowie vorteilhafte Anwendungsmöglichkeiten und Ausführungen der Erfindung werden in der nachfolgenden Beschreibung von Ausführungsbeispielen unter Bezugnahme auf die Zeichnungen verdeutlicht. Es zeigen:
- Fig. 1: ein Blockschaltbild einer Sendeeinrichtung,
- Fig. 2: ein Diagramm mit Master-Bit-Clock-Signal und einem Clock-Signal,
- Fig. 3: ein Blockschaltbild eines Empfängers,
- Fig. 4: ein Blockschaltbild eines Clock-Generators im Empfängergerät nach einer Teiler- oder/oder Vervielfacher-Variante,
- Fig. 5: ein Blockschaltbild eines empfängerseitigen Clock-Generators nach dem PLL-Prinzip,
- Fig. 6: ein weiteres Blockschaltbild eines Clock-Generators des Empfängers nach dem DDS-Prinzip,
- Fig. 7: ein Blockschaltbild eines empfängerseitigen Clock-Generators nach einer phasen-skalierenden DDS-Variante,
- Fig. 8: ein Blockschaltbild des empfängerseitigen Clock-Generators, der nach einer Heterodyn-DDS-Variante arbeitet,
- Fig. 9: diverse Diagramme von möglichen Wellenformen für diverse DDS-Verfahren und
- Fig. 10: ein schematisches Blockschaltbild mehrerer mit der Sendeeinheit gekoppelter Empfänger.

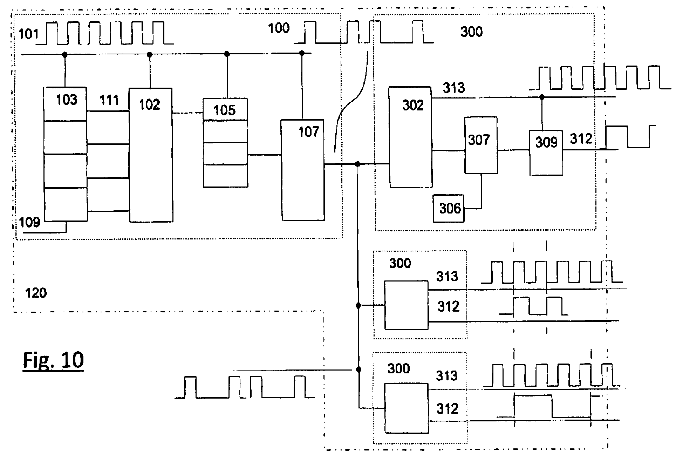

Wie anhand der Fig. 1 bis 3 und 10 erläutert weist das Synchronisationssystem mindestens ein Sendegerät 100 und beliebig viele Empfänger 300 auf, die alle das Multi-Clock- oder Taktsignal 115 des Senders 100 empfangen. Verwendung findet hierbei z.B. eine Bus- und/oder Daisy-Chain-Topologie und/oder eine übergeordnete Baum-Topologie mit optionalen Repeatern. Der Übertragungskanal bzw. die Leitung kann zur Ausfall-Sicherheit auch redundant ausgeführt sein.

Das Interface oder Synchronisationssystem verwendet einen selbsttaktenden Leitungscode mit einer Master-Bitclock-Frequenz, vorzugsweise in einem Frequenzbereich fB (z.B. 10MHz, 27MHz, oder 270MHz). Ein Empfängerspezifisches Clock-Signal kann somit bei jedem Empfänger sofort und präzise, z.B. PLL phasen-verkoppelt mit dem Sender lokal regeneriert werden. Daraus sollen die Empfänger neue Frequenzen *fi*=(Zi/Ni)*fB (i=1,...,M) gewinnen.

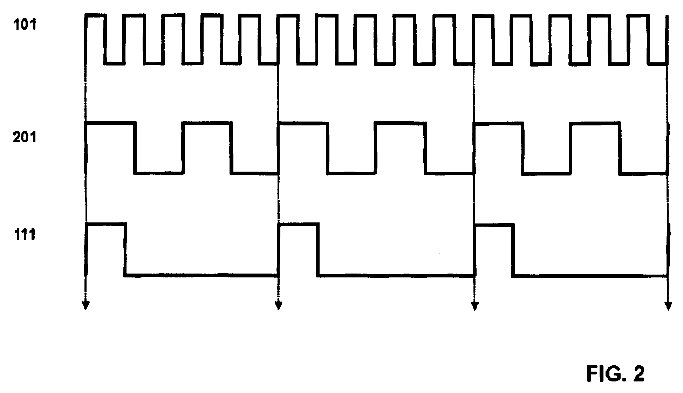

Im *fB*-getakteten Bit-Stream wird vom Sender 100 ein Dummy-Bit-Pattem generiert, das mit keinem anderen der zu verwendenden Bit-Pattem oder (Bit-Muster) zu verwechseln ist. Zu geeigneten Zeitpunkten der Master-Bitclock fB 101 generiert der Sender 100 Bit-Patterns xi[k] (i=1,...M) der Länge L (mit Bit-Adresse k=0,...,(L-1)), die jeweils den einzelnen zu erzeugenden Frequenzen *fi* (i=1,...M) oder Frequenzgruppen zum selben Ni eineindeutig unverwechselbar zugeordnet sind. Der Sender 100 darf dabei, falls nötig, ein bereits laufendes Bit-Pattem abbrechen und unmittelbar mit einem neuen Bit-Pattem höherer Prioriät beginnen. Ein Bit-Adress-Counter wird insoweit auf Null gesetzt. Der Startzeitpunkt des Bit-Patterns *xi* liegt dabei konstant verkoppelt mit dem Phasen-Nulldurchgang zur Frequenz *fi* in einem festen Zeitraster, das durch den Master-Bitclock-Takt gegeben ist, wie dies z.B. in Fig.2, am Beispiel mit Zi=2 und Ni=5 verdeutlicht ist.

Nicht zu allen Phasen-Nulldurchgängen eines gewünschten *fi* darf ein Bit-Pattern gesendet werden, sondern nur falls dieser *fi* Phasen-Nulldurchgang exakt mit dem Phasen-Nulldurchgang der Master-Bitclock fB 101 zusammenfällt und wenn gerade kein Bit-Pattern höherer Priorität gesendet wird. Da *fi*=(Zi/Ni)**fB* gilt, kann das Bit-Pattem *xi* im günstigsten Fall nur alle Ni Master-Bitclocks gesendet werden, was einer Mindest-Wiederholdauer von Ni*TB=Ni/*fB* entspricht, wie dies in Fig.2 anhand des Signal 111 verdeutlicht wird. Die individuelle Signalisierung 111 des gemeinsamen Phasen-Nulldurchgangs eines jeden gewünschten Clock-Signals 201 mit dem Master-Bit-Clock-Signal fB 101 wird jeweils durch einen entsprechenden Teiler 1/Ni 103 realisiert. Zu beachten ist, dass, falls die Länge der Bit-Patterns L beträgt, die vollständige Sendung sowieso L Master-Bitclocks erfordert.

Unter allen konkurrierenden *fi,* die gerade diesen Phasen-Nulldurchgang haben bzw. deren Bit-Pattern gerade noch gesendet wird, wählt eine Scheduler-Logik in Form einer Steuerung 102 möglichst gerecht aus, so dass keine zu langen Auslassungs-Zeiten für jedes zu verwendete Clock-Signal entstehen. Bei hoher Priorität, etwa bei z.B. wegen eines vergleichsweise großem Ni zeitlich selten auftretenden *xi* darf der Sender auch ein bereits gesendetes anderes Bit-Pattem vorzeitig abbrechen (d.h. zerstören). Durch diese Konstruktion ist das zeitliche Raster des Startzeitpunktes eines Bit-Patterns vorteilhaft durch die kleine Periodendauer TB=1/*fB* der Master-Bitclock gegeben, und nicht etwa durch M*TB oder L*TB.

Die richtigen Zeitpunkte der gemeinsamen Nulldurchgänge der Signale mit den Frequenzen *fi* und das Master-Bit-Clock-Signal werden im Sender durch Teiler 1:Nig aus *fB* 101 frequenz-mäßig exakt und phasen-mäßig starr verkoppelt gewonnen, wie in Fig. 1 und 2 angedeutet

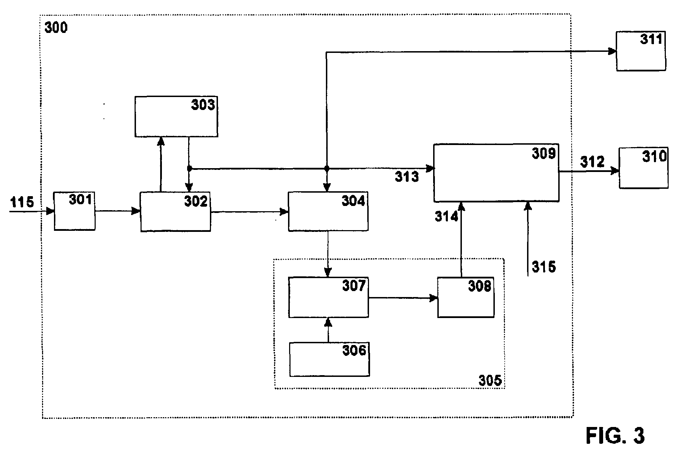

Jeder der in Fig. 3 isoliert dargestellten Empfänger 300 besitzt ein Eingangs-Interface 301 zum Empfang des Multi-Clock-Signals 115, einen Demodulator 302 und ein Schieberegister 304 für den Eingangs-Bitstream. Jeder Empfänger generiert die Master-Bitcklock fB 313 direkt aus dem selbsttaktenden Leitungscode durch eine PLL 303. Das regenerierte *fB* kann durch ein Ausgangs-Interface 311 ausgegeben werden. Ein Clock-Generator 309 erzeugt die gewünschte Frequenz *fi* 312, die schließlich durch ein Ausgangs-Interface 310 ausgegeben wird.

Ein Pattern-Detector 305 setzt über das Signal "reset phase" 314 bei erkanntem ("match") mit einem empfangenen Bit-Pattem *xi,* welches regelmäßig eintrifft, die Phase des Clock-Generators 309 zu fi auf null oder auf einen anderen gewünschten Phasenoffset ϕ0 315, welcher frei wählbar ist. Durch diese Konstruktion ist das Clock-Signal 312 nach einem ersten Eintreffen und Verarbeiten von xi im Empfänger frequenz-mäßig exakt und phasen-absolut und prinzipiell ohne zusätzlichen Jitter mit dem Sender verkoppelt.

Der Empfänger würde hiernach im prinzipiell keine weitere Phasen-Synchronisation durch *xi* mehr benötigen solange das Master-Bit-Clock-Signal *fB* weiter verfügbar ist. Durch Verwendung einer fB-PLL, sozusagen als "Schwungrad" im Empfänger und durch die Wahl geeigneter Bit-Patterns zusammen mit einem bit-fehler-erkennenden oder sogar korrigierenden Muster Erkenner ist eine gewisse Kanalstörung zulässig.

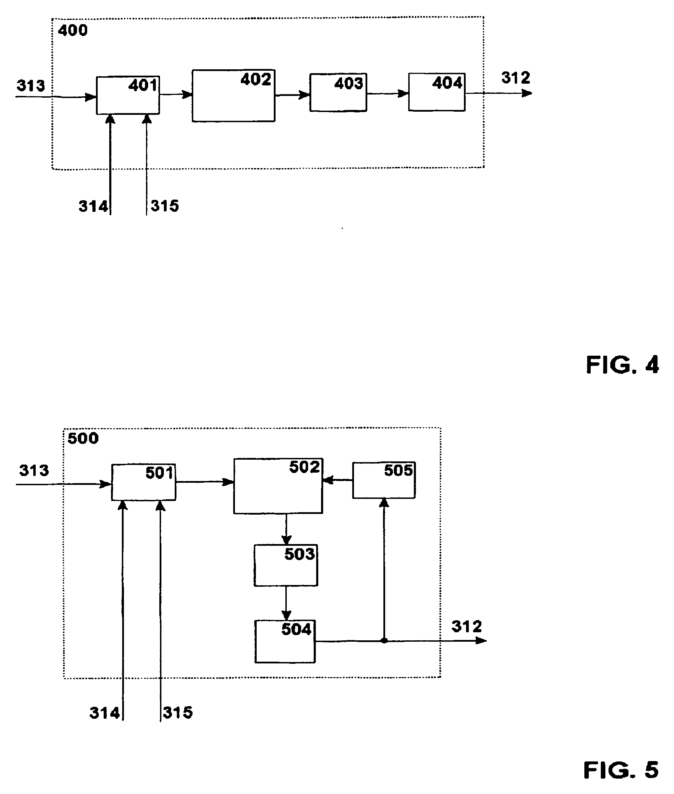

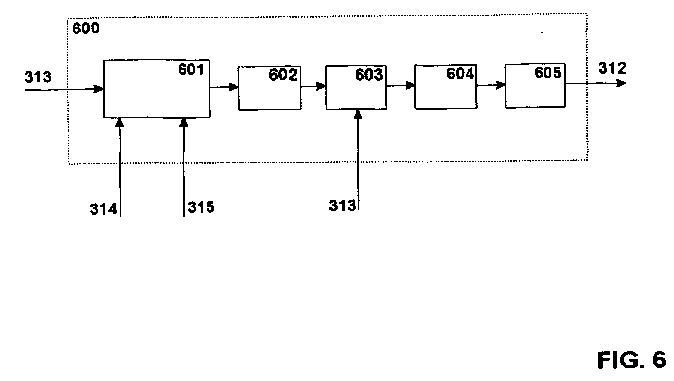

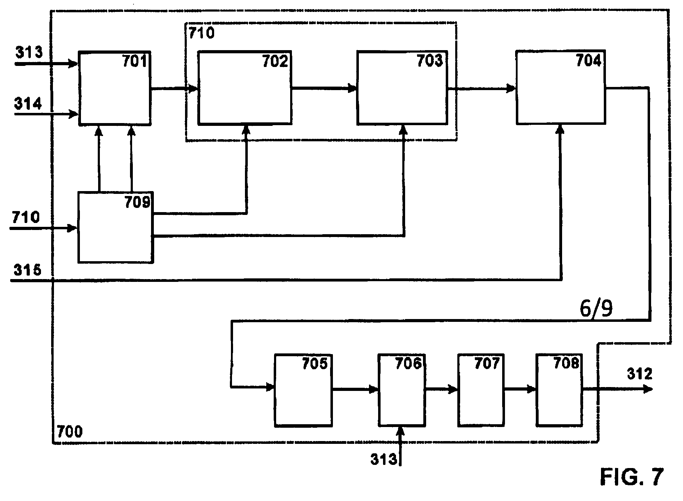

Der Clock-Generator 309 im Empfänger kann zur Erzeugung von *fi* aus *fB* wahlweise einen Phasen-synchronisierten Teiler und/oder Vervielfacher (fB/Ni)*Zi 400, wie in Fig. 4 dargestellt, eine in Fig. 5 angedeutete PLL 500 oder einen in den Fig.6 und 7 gezeigten DDS-Generator-Varianten als Modul verwenden. Der DDS-Generator ist für große Ni der PLL vorzuziehen.

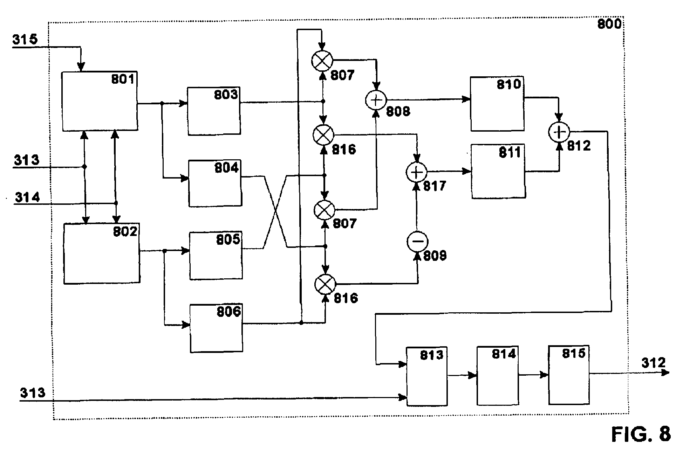

Der DDS-Generator soll hierbei exakt arbeiten, vorzugsweise nach dem erfindungsgemäßem, in Fig. 7 verdeutlichten-phase-scaling Prinzip 700 "scaledds" mit präziser variabler Phase operieren. Für große Ni ist weiterhin auch das Prinzip heterodyn-DDS "hetdds" 800, wie in Fig.8 verdeutlicht möglich. Weitere DDS-Varianten sind dabei möglich. Zur Verwendung einer DDS muss *fi* dabei das Nyquist-Kriterium erfüllen, d.h. *fi < fB*/*2.* Frequenzen >= fB/2 lassen sich jedoch über PLLs aus geeigneten niedrigeren *fi*-phasen-verkoppelt konstruieren. Bei *fi* mit Zi=1 ist der Phasen-synchronisierte Teiler ohne Vervielfacher vorteilhaft.

Zwischen Phasen-Nulldurchgang im Sender 100 und Phase null im Empfänger 300 besteht eine En/Decode-Verzögerung, die jedoch gemäß beschriebenem Prinzip konstant ist und für alle Empfänger 300 identisch bzw. reproduzierbar ist, und daher keine Quelle von Jitter darstellt. Hinzu kommen physikalisch bedingte Laufzeit-Verzögerungen, die für jeden Empfänger verschieden sein können. Eine Kompensation dieser Verzögerungen zwischen Sender und Empfänger ist in jedem Empfänger individuell, reproduzierbar und hochpräzise möglich durch die wählbare variable Phase ϕ0 (315). Die Phase ϕ0 kann auch genutzt werden, um frei wählbare gewollte Phasenverschiebungen des *Clock-Signals fi* zu realisieren.

Der Empfänger 300 kann statt eines harten Setzens der Phase bei Erkennen eines Bitmusters fehlertolerante Methoden wie z.B. eine äußere PLL verwenden, welche die Phase der inneren PLL bzw. DDS nachregelt. Dies ist insbesondere vorteilhaft bei einem stark gestörten Kanal, bei welchem trotz vorgesehener Fehler-Toleranz des verwendeten Codes Fehl-Matches auftreten können.

Der Empfänger 300 kann seine DDS auch mit einer aus *fB* ganzzahlig geteilten Sample-Clock betreiben. Hierzu muss Zi/Ni im Empfänger-DDS mit demselben Faktor multipliziert werden, beispielsweise dadurch, dass bei unverändertem Ni das Zi im Empfänger mit demselben Faktor multipliziert wird. Weiterhin muss bei Match der entsprechende Sample-Clock-Teiler auf null gesetzt werden.

Der beschriebene Empfänger 300 kann auch als Baugruppe, z.B. als Empfangs-Modul in einem anderen übergeordneten Ton- oder Bildbearbeitungsgerät, sozusagen als Empfänger-Modul integriert sein.

Je mehr Frequenzen *fi* oder Bit-Patterns xi gleichzeitig im Sender 100 Verwendung finden und somit untereinander konkurrieren, desto größer können die zeitlichen Abstände für das Versenden jedes einzelnen Clock-Signals werden, zu denen jeweils ein Bitmuster *xi* gesendet wird. Da aber die Frequenz *fi* via PLL oder DDS mit dem durch den selbsttaktender Leitungscode permanent im Empfänger verfügbaren höherfrequenten *fB* verkoppelt ist, driftet die Phase prinzipiell nicht. Lediglich der Anfangszeitpunkt bis zum erstmaligen Einstellen der korrekten Phase im Empfänger kann evtI. etwas auf sich warten lassen, nämlich bis das geforderte *xi* zum erstmalig beim Empfänger 300, z.B. nach dessen Einschalten oder Ankoppeln an das Multi-Clock-Signal im laufenden System eingeht.

Eine vorteilhafte Reduktion der Anzahl der zu unterscheidenden *xi* kann vorgenommen werden für eine Klasse von *fi*, deren Ni Werte alle Teiler eines gemeinsamen nicht zu großen ganzzahligen Nig sind. Dann sind die Master-Bitclock-synchronen Phasen-Nulldurchgänge für dieses Nig immer auch Master-Bitclock-synchrone Phasen-Nulldurchgänge all dieser *fi*. Daher ist es in einem solchen Fall vorteilhaft, alle Frequenzen *fi* desselben Nig zu einer Klasse mit nur einem Index ig, d.h. mit demselben xig zusammenzufassen. Dies gilt nicht, falls diese Frequenzen *fi* bereits im Sender 100 bewusst unterschiedliche Phasen besitzen sollen.

Man beachte, dass im Prinzip auch ein einziges (d.h. M=1) system-weites xi' mit Ni' = "kleinstes gemeinsames Vielfaches aller Ni" gewählt werden könnte. Dieses Ni' als auch die Wartezeiten zwischen gesendeten *xi* wäre unter Umständen unvorteilhaft groß, z.B. Minuten oder Stunden. Das Versenden mehrerer xi (M>1) mit kleineren Ni ist daher zu bevorzugen.

Eine zentrale oder separate Reset-Leitung ist nicht notwendig. Ein Empfänger 300 kann vorteilhaft zu beliebigem Zeitpunkt an einen bereits laufenden Sender 100 angekoppelt werden, er ist sozusagen "hot-swappable". Der Sender 100 kann intern einen Master-Reset 109 verwenden zur Phasen-Rückstellung aller oder einer Teilmenge der Teiler der beteiligten Frequenzen *fi.*

Die beschriebene Lösung erlaubt bei geeigneter Wahl der Bit-Patterns sogar, einen vom Sender generierten Bit-Strom zu beliebigem Zeitpunkt mit anderen gültigen, zumindest aber gegenseitig nicht fehlinterpretierbaren Bit-Patterns zu überschreiben ("Overwrite"), sofern diese takt-synchron zu *fB* laufen und dies Modulations-konform geschieht Dies geht aber auf Kosten der Zeitabstände zwischen der wiederholten Sendung der bereits vorhandenen Bit-Pattems, erzeugt allerdings aber auch keinen Fehler. Eine Möglichkeit der vorteilhaften Nutzung dieser Überschreib-Toleranz ist die Verwendung eines Master-Senders mit fB und separeten "Overwriter-Modulen", die auf den Bitstrom jeweils noch ihre eigenen *fi* aufprägen und in einer Daisy-Chain angeordnet werden können.

Zur Ablegung der Parameter Ni, Zi, und der Bit-Patterns *xi* und/oder zur Realisierung des Waveform-Memory im DDS und sonstigen Lookup-Tables können ROMs und RAMs und sonstige Speicher verwendet werden. Das System ist vorteilhaft rekonfigurierbar, beispielsweise durch die Verwendung von RAM oder FlashRAM oder EPROM oder EEPROM oder MRAM Bausteinen. Dies gilt sowohl für Sender als auch Empfänger.

Das Master-Bitclock-Signal 101 ist vorzugsweise aus einer höchststabilen Referenz 110 abgeleitet, etwa aus einem intern Wasserstoff-Maser, Cäsium-, Rubidium- oder Quarz-Oszillator oder extern, z.B. aus GPS oder DCF-77 Signalen oder einem anderweitig bereits vorhandener Studiotakt; dies unter Umständen mit Hilfe einer PLL oder eines Vor-Teilers.

Die beschriebene Sende- und/oder Empfänger-Logik soll vorzugsweise durch FPGAs oder ASICs oder DSPs implementiert werden. Pipeline-Implementierungen sind möglich.

Das Interface verwendet als physikalisches Übertragungmedium ("Kanal", "Leitung") wahlweise z.B. unsymmetrische Koaxial-Verbindung (z.B. 50 Ωoder 75 Ω oder 93 Ω), symmetrische differentielle Twisted-Pair-Verbindung (z.B. 100Ω, 110 Ω, 150 Ω oder 600Ω), optische Verbindungsmittel im IR- bis UV-Spektralbereich direkt oder via Lichtwellenleiter (LWL) oder via Glasfaser (Fiber). Alternativ oder ergänzend können Funkübertragungen, etwa Wireless, <1THz, Mikrowelle in Hohlleiter, THz-Strahlung, oder Ultraschall Verwendung finden.

Die Funktionsweise des Schedulers wird nachfolgend unter Bezugnahme auf Fig. 1 erläutert.

Die Arbitrationslogik, bzw. oder Scheduler 102 entscheidet Master-Bitclock-Takt-synchron, welches Bit-Pattern xi[k] (i=1,...,M mit k=0,...,(L-1)) oder "Dummy"-Pattern x0 für den Output-Stream durch den Selector 106 gewählt wird und wann es gestartet wird. Das ausgewählte Pattem wird im Modulator 107 moduliert und über das Ausgangs-Interface 108 als Multi-Clock-Signal 115 ausgegeben.

Der Scheduler erzeugt zu diesem Zweck ein "reset" 112 und den Index-Wert isel=0,...,M 114. Der Wert isel wird dem Selector 106 zugeführt und bestimmt, welches Bit-Pattern *xi* instantan zum Output geschaltet wird, wobei ein Wert isel=0 dem Dummy-Bit-Pattem x0 entspricht. Der zyklische Bit-Adress-Generator 104 bestimmt, welches Bit k (k=0,...,(L-1)) des gewählten Bit-Pattern xisel instantan aus den M+1 unterschiedlichen Bit-Pattem-Memories 105 ausgegeben wird. Das mit "xisel" bezeichnete Bit-Pattem ist dasjenige, welches vom Scheduler zum Senden unter allen verfügbaren *xi* ausgewählt wurde und entspricht dem ausgewählten Ni. Falls das Signal "reset" 112 aktiv ist, setzt sich der Bit-Adress-Generator synchron zum nächsten Master-Bitclock-Takt, unter Umständen auch schon vorzeitig auf k=0.

Der oben beschriebene Phasen-Nulldurchgang eines jeden *fi* wird von dem jeweils zugehörigen Teiler 103 dem Scheduler signalisiert über das Signal "phase(i)=0 flag" 111, und zwar für alle i=1,...,M individuell, d.h. parallel und jeweils nur für die Dauer des entsprechenden Master-Bitclock-Taktes. Der Bit-Adress-Generator liefert das Signal "end" 113 an den Scheduler, wobei "end" genau innerhalb des letzten Master-Bitclock-Taktes seines Zyklus, d.h. k gleich L-1 aktiv wird.

Wichtig ist, dass nach Ablauf eines *xi,* dieses ohne erneuten Phasen-Nulldurchgang des zugehörigen *fi* nicht zyklisch wiederholt wird. Das Dummy-Bit-Pattem dient als Lückenfüller. Das Bit-Pattem *xi* darf nur gesendet werden, wenn ein Phasen-Nulldurchgang des *fi* vorliegt. Dabei muss der zeitliche Abstand zwischen Phasen-Nulldurchgang eines *fi* und dem Output des ersten Bit von *xi* konstant sein.

Eine mögliche Implementierung des Schedulers weist eine durch die Master-Bitclock 101 getaktete State-Machine auf, die algorithmisch durch folgende Regeln zur Erzeugung von isel 114 und "rest" 112 beschrieben wird:
- Für jedes *i=1,...,M existiert* ein individueller "Ranking-Wert" *Ri=1,...,M,* wobei *Ri* ungleich *Rj* für *i* ungleich *j*. Zu Systemstart wird *Ri=M+1-i* (*i=1,...,M*) als Initialisierung gesetzt. Der Wert *isel* ist enthalten in einem Register. Zu Systemstart wird isel=0 gesetzt.
- Falls "end" aktiv ist und momentan nicht das Dummy gesendet wird (d.h. isel ≠ 0), wird das Ranking folgendermaßen sofort aktualisiert: Für alle i mit Ri < Risel (d.h. kleineres Ranking als momentanes) wird das zugehörige Ri um eins inkrementiert. Risel wird danach auf niedrigsten Rang, also eins, gesetzt (erst bei "end", damit nicht direkt wieder durch einen unwichtigeren anderen abgebrochen werden kann).

- Aus der Teilmenge der *i*, die momentan ihren Phasen-Nulldurchgang signalisieren, suche (nach obiger möglicher Aktualisierung der *Ri*) das *i0*, welches das größte Ri unter diesen i aufweist. Falls diese Teilmenge nicht leer ist, existiert ein *i0.* Dieses *i0* wird dann als "Gewinner" bezeichnet, wenn "end" aktiv ist oder wenn momentan das Dummy-Bit-Pattern gesendet wird (d.h. *isel* = *0*) oder wenn *Ri0* echt größer ist als *Risel* des momentan gesendeten *isel* (wodurch insbes. verhindert wird, dass ein i sich selbst abbricht, z.B. bei *Ni < L).*
- Falls ein "Gewinner" i0 existiert, so wird zum nächsten Master-Bitclock-Takt dieses i0 zum neuen momentan gesendeten Bit-Pattern, d.h. zum nächsten Master-Bitclock-Takt wird isel=i0 gesetzt, und dem Bit-Adress-Generator wird sofort über "reset" angezeigt, dass er zum nächsten Master-Bitclock-Takt neu starten soll. Dies kann zur Folge haben, dass das momentan gesendete xisel vorzeitig abgebrochen wird und kein "end" erzeugt wird (d.h. alle Ri bleiben unverändert).
- Gibt es im Takt des letzten Bit (signalisiert durch "end") keinen "Gewinner" i0, so wird zum nächsten Bit-Takt automatisch das Dummy-Bit-Pattem x0 ausgewählt (d.h. isel=0 gesetzt) und zyklisch wiederholt, bis wieder ein "Gewinner" existiert.

Der Scheduler kann auch nach einem anderen Schema als dem oben beschriebenen Algorithmus das Signal "reset" **(112)** und den Wert *isel* **(114)** generieren. Der Scheduler kann wahlweise auch nur eine durch den Benutzer definierbare Teilmenge der "aktiven" *fi* nach obigem Schema berücksichtigen, indem er die Phase-Nulldurchgänge der nicht-aktiven fj ignoriert.

Unter Bezugnahme auf Fig. 3 wird nachfolgend die Funktionsweise des Pattern-Detectors im Empfänger erläutert.

Der Pattern-Detector 305 vergleicht 307 den Inhalt des Schieberegisters 304 zu jedem Master-Takt *fB* mit den Bits des gewünschten Patterns 306 xi, parallel für alle Bits gleichzeitig, und liefert als Output die Anzahl der übereinstimmenden Bits. Das Signal "match" wird gesetzt von einem Entscheider 308, dessen Schwelle eine gewisse Anzahl fehlerhafter Bits zulässt. Die gewählte Schwelle hängt von der Hammingdistanz der Bit-Patterns ab.

Das Konzept funktioniert gemäß Minimum-Hammingdistanz-Prinzip (bzw. Maximum-Likelyhood) und ist daher bit-fehler-erkennend oder sogar -korrigierend bis zu einer gewissen Bit-Fehler-Zahl bzw. -Dichte. Insofern entstehen keine kurzzeitig falschen Phasen.

Da bei den Bits beim Schieberegister die zuerst eingehenden am Ende des Registerwortes stehen, muss dieses mit der umgekehrten Bitfolge ("reversed") von *xi* verglichen werden.

Der Empfänger 300 kann bei Ausführungsvarianten des Clock-Generators nach dem Teiler- und Vervielfacher Prinzip die gewünschte Frequenz *fi* 312 aus der regenerierten Master-Bitclock *fB* 313 erzeugen durch Verwendung eines in Figu. 4 dargestellten Teiler- und Vervielfacher Moduls 400 als Clock-Generator 309, realisiert durch einen phasen-synchronisierbaren Teiler 1/Ni 401 und anschließenden Frequenz-Vervielfacher *Zi 402 und Filter 403. Der Frequenz-Vervielfacher kann mit nichtlinearen Bauelementen z.B. allg. Dioden, Schottky-Diode, Tunnel-Diode, oder Step-Recovery-Diode, allg. Transistoren und Pulsgeneratoren, z.B. mit einem "Frequency Comb Generator realisiert werden. Ein folgender Slicer 404 liefert schließlich ein digitales Clock-Signal *fi.* Der Slicer 404 weist vorzugsweise zur Störunterdrückung eine Hysterese auf.

Ist Zi=1, so können die Bausteine 402, 403, 404 entfallen. Der Phasenoffset ϕ0 315 wird realisiert durch fB-synchrones Laden eines definierten Zählerstandes in den Teiler bei Vorliegen von "reset phase" (314). Die zeitliche Auflösung Δt des wählbaren Phasenoffsets ϕ0 315 beträgt beim Teiler+Vervielfacher Prinzip Δt=1/fB (z.B. ca. 3.7ns für fB=270MHz).

Bei einer Ausführungsvariante des Clock-Generators nach dem PLL Prinzip kann der Empfänger, wie in Fig. 5 aufgezeigt, die gewünschte Frequenz *fi* 312 aus der regenerierten Master-Bitclock *fB* 313 erzeugen durch Verwendung eines PLL Moduls 500 als Clock-Generator 309, realisiert durch eine phasensynchronisierbare PLL Variante. Die PLL besteht aus einem phasen-synchronisierbaren Teiler *1*/*Ni* 501, einem Frequenz- und Phasen-Komparator 502, einem Loop-Filter 503, einem VCO 504 und einem Teiler *1*/*Zi* 505. Die PLL kann analog mit VCO (insbesondere auch VCXO oder Solid-State Silicon Oscillator) oder sogar vollständig digital (mit NCO oder DCO statt VCO) aufgebaut sein. Das gewünschte digitale Clock-Signal *fi* steht hinter dem VCO zur Verfügung. Der Phasenoffset *ϕ0* 315 wird realisiert durch *fB*-synchrones Laden eines definierten Zählerstandes in den Teiler bei Vorliegen von "reset phase" 314. Die zeitliche Auflösung *Δt* des wählbaren Phasenoffsets *ϕ0* beträgt beim PLL Prinzip *Δt=1*/*fB* (z.B. ca. 3.7ns für *fB*=270MHz).

Bei einer Ausführungsvariante des Clock-Generators nach dem DDS Prinzip kann der Empfänger kann die gewünschte Frequenz fi 312 aus der regenerierten Master-Bitclock fB 313 erzeugen durch Verwendung eines in Fig 6 dargestellten DDS Moduls 600 als Clock-Generator 309, realisiert durch eine exakte DDS Variante. Der DDS weist einen Phasen-Accumulator 601, ein Waveform-Memory 602, einen Digital-to-Analog-Converter DAC 603, einen DAC-Filter 604 und einen Slicer 605 auf. Der Slicer 605 weist vorzugsweise zur Störunterdrückung eine Hysterese auf. Die Sample-Rate des DDS entspricht der regenerierten Master-Bitclock fB 313. Der Phasen-Accumulator 601 berechnet pro Master-Bitclock-Takt den Phasen-Wert neu zu P:=(P+Zi) mod Ni. Der Wert P dient direkt als Adresse für das Waveform-Memory 602, welches genau Ni Samples einer Waveform-Periode enthält. Hierbei ist zu beachten, dass *Ni* im allgemeinen nicht von der Form *2ⁿ* ist, so dass konventionelle Radix-2 DDS Lösungen ungeeignet sind.

Als Waveform wird vorzugsweise eine optimierte, z.B. nicht-sinus-förmige periodische Waveform gewählt, wie unter "scaledds" beschrieben. Das DAC-Filter 604 ist z.B. ein passives LC-Filter hoher Ordnung. Der Phasenoffset *ϕ0*0 315 wird realisiert durch fB-synchrones Laden eines definierten Phasenwertes in den Accumulator bei Vorliegen von "reset phase" 314. Die zeitliche Auflösung *Δt* des wählbaren Phasenoffsets *ϕ0* 315 beträgt beim DDS Prinzip *Δt=1*/*(Ni*fi)=1*/*(Zi*fB)* (z.B. ca. 1.37ps für *fB*=270MHz, *fi*=44.1kHz mit *Zi*=2695, *Ni*=16500000 falls *Ni*<2²⁴ gewünscht).

Bei einer weiteren, in Fig. 7 gezeigten Ausführungsvariante des Clock-Generators nach dem DDS Prinzip "scaledds" kann der Empfänger die gewünschte Frequenz *fi* 312 aus der regenerierten Master-Bitclock *fB* 313 erzeugen durch Verwendung eines Phasen-Scaler DDS Moduls "scaledds" 700 als Clock-Generator 309, realisiert nach dem im folgenden als "scaledds" bezeichneten Prinzip.

Die Sample-Rate des "scaledds" entspricht der regenerierten Master-Bitclock fB 313. Der Phasen-Accumulator 701 ist ein Modulo-Ni Addierer mit Inkrement Zi pro Takt und habe die Bitzahl NP (z.B. NP=32 oder 40bit). Dann muss das maximale Ni kleiner 2^{NP} sein, um alle fi exakt erzeugen zu können. Dieser "scaledds" ist insbesondere vorteilhaft bei sehr großem Ni, wo das DDS-Waveform-Memory der Größe Ni unrealistisch groß wäre. Hier verwendet "scaledds" erfindungsgemäß ein Waveform-Memory 705 fester mittlerer Größe 2^{NA}, bestehend aus 2^{NA} Samples genau einer Waveform-Periode mit NA Adressbits und ND Datenwortbits (z.B. 32MByte für NA=24 und ND=16, oder 3GByte für NA=30 und ND=24), unabhängig von fi. Der Phasen-Accumulator 701 berechnet pro Master-Bitclock-Takt den Phasen-Wert neu zu *P:=(P+Zi) mod Ni.* Bei Vorliegen von "reset phase" 314 wird der Accumulator *fB*-synchron mit Wert null geladen. Der anschließende Phasen-Scaler 710 weist einen Integer-Multiplizierer 702 und einen Addierer 703 auf. Der Multiplizierer 702 berechnet *PA:=(P*Xi) mod 2^{NP+NA}* und der Addierer 703 berechnet daraus den Wert *AA:=(PA+DXi) mod 2^{NP+NA}.* Dabei ist der Faktor *Xi:=floor( 2^{(NP+NA)}*/*Ni).* Dieser Faktor *Xi* hängt von *fi* über *Ni* ab und ist ein großer Integer (z.B. 56 oder 64bit). Schließlich berechnet ein Phasen-Verschieber 704 die Waveform-Adresse *A:= ((AA+ϕ0)* /*2^{NP}) mod 2^{NA}*. Dabei ist *ϕ0*315 die hochaufgelöste variable Phasenverschiebung. Da diese Phasenverschiebung hinter dem Phasen-Scaler folgt, ist der Wertebereich vorteilhaft normiert, d.h. unabhängig von *Ni.* Der Phasen-Scaler 710 beinhaltet eine optimierbare Phasenkorrektur *DXi* gegen einen mittleren Adress-Rundungsfehler von *AA* nach A von *NP+NA* auf *NA* Bits.

Durch die vorgeschlagene Wahl der Bitzahl und des Faktors *Xi* wird der Peak-Jitter durch die vorliegende Adress-Rundung des Phasen-Verschiebers 704 dennoch kleiner als 1 Adress-Inkrement, entsprechend einer Zeit *Δt=1*/*(2^{NA}*fi)* (z.B. ca. 1.35ps bei 44.1kHz bei *NP*=32 und *NA=*24)*.* Die Frequenz *fi* bleibt dennoch exakt. Dieser Rundungs-Jitter ist sogar vernachlässigbar gegen Jitter, der durch die endliche Waveform-Datenwortbreite von *ND* Bits prinzipiell in jedem DDS entsteht, wenn *ND<NA-1* (z.B. *ND*=16bit vs. *NA*=24bit).
Die mittlere zeitliche Auflösung *Δt* der Phasenverschiebung *ϕ0*315 beim "scaledds" ist bestenfalls *Δt=1*/*(2^{NP+NA}*fi),* praktisch nutzbar (im Vergleich zum Jitter) ist jedoch typischerweise *Δt=1*/*(2^{NA}*fi)* (z.B. ca. 1.35ps bei 44.1kHz bei *NP*=32 und *NA*=24).

Benötigte Parameter zu jedem gewünschten *fi* (wie z.B. *Ni, Zi, Xi, DXi*) können z.B. in einer Lookup-Table 709 hinterlegt sein, die über einen Indexwert 710 adressiert werden kann.

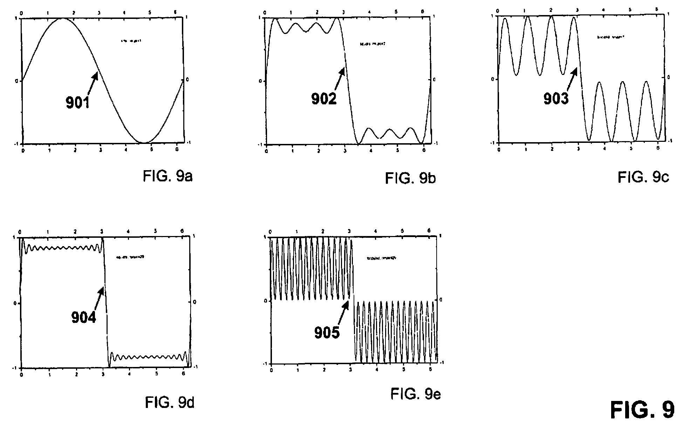

Der Wert A dient als Adresse für das Waveform-Memory 705, welches das dort abgelegte Datenwort *D(A)* an den Digital-to-Analog-Converter 706 liefert. Das analoge Signal des DAC-Ausgangs wird an ein DAC-Filter 707 geleitet. Das DAC-Filter 707 ist z.B. ein passives LC-Filter hoher Ordnung (z.B. vom Typ Bessel, Butterworth, Tschebyscheff, inverses Tschebyscheff).
Als Waveform wird vorzugsweise eine optimierte (sinus- oder nicht-sinusförmige) periodische Waveform gewählt, so dass der Slicer 708 nach dem DAC-Filter 707 ein digitales Signal der Frequenz *fi* einen minimalen Jitter erzeugt. Die Waveform soll dabei zur Vermeidung von Aliasing das Nyquist-Kriterium erfüllen, welches die maximale Harmonische *nmax* in der Fourier-Entwicklung bestimmt. Vorzugsweise sollen nur ungeradzahlige Harmonische gemäß Rechteck-Entwicklung verwendet werden, wie z.B. die in den Graphen 902 und 904 in Figur 9 aufgezeigten Wellenformen. Hierbei soll die höchste, ebenfalls ungerade Harmonische *nmax* amplituden-mäßig verstärkt sein, z.B. Fourier-Amplitude=1/*n* für ungerade *n<nmax* und π/4 für *nmax,* wie in den Graphen 093, 905 verdeutlicht. Dies bietet gegenüber einem in 901 gezeigten sinusförmigem Signal den Vorteil, dass die Steigung der Waveform in den Nulldurchgängen vergrößert ist bei in etwa gleichbleibender max. Amplitude, was den Jitter nach dem Slicer reduziert.
Der Slicer 708 in "scaledds" besitzt vorzugsweise eine Hysterese zur Vermeidung von falschen Signalflanken, die durch nicht eliminierbares analoges Rauschen oder Über/Unterschwinger zur Nulllinie am analogen DAC-Filter-Ausgang sonst entstehen könnten.

Der "scaldds" erlaubt insbesondere eine vorteilhafte Pipeline-Implementierung, getaktet durch die Master-Bitclock *fB*. Der "scaledds" benötigt nur einen Integer-Multiplizierer, was den Aufwand gering hält. Benötigte Divisionen und Modulo-Berechnungen durch Zahlen der Form 2", etwa im Phasen-Scaler und Phasen-Verschieber sind vorteilhaft durch Bitverschiebungen und -auslassungen sehr effizient implementierbar.

Bei einer weiteren, in Fig. 8 gezeigten Ausführungsvariante des Clock-Generators nach dem DDS Prinzip "hetdds" kann der Empfänger die gewünschte Frequenz *fi* 312 aus der regenerierten Master-Bitclock *fB* 313 erzeugen durch Verwendung eines Heterodyn DDS Moduls "hetdds" 800 als Clock-Generator 309, realisiert nach dem im folgenden beschriebenen als "hetdds" bezeichneten Prinzip.

Das anhand Fig. 8 erläuterte Prinzip "hetdds" setzt eine Zerlegung der Form *Zi*/*Ni* = *ZA*/*NA* + *ZB*/*NB* mit ganzzahligen *ZA,NA,ZB,NB* voraus zur Erzeugung von *fi* 312. Dabei können *ZA,ZB* auch negativ sein, was modulo *NA* bzw. *NB* äquivalent zu einem positiven *ZA'=nNA+ZA* bzw. *ZB'=nNB+ZB* ist. Sofern derartige *NA,NB* existieren, die beide wesentlich kleiner als *Ni* sind, ist dieser "hetdds" insbesondere vorteilhaft bei sehr großem *Ni,* wenn das DDS-Waveform-Memory der Größe *Ni* unrealistisch groß wäre.

Der "hetdds" weist einen modulo-*NA* Phasen-Accumulator 801 mit Inkrement *ZA,* einen modulo-*NB* Phasen-Accumulator 802 mit Inkrement *ZB,* ein Cosinus-Waveform-Memory 803 der Länge *NA,* ein Sinus-Waveform-Memory 804 der Länge *NA,* ein Cosinus-Waveform-Memory 805 der Länge *NB,* ein Sinus-Waveform-Memory 806 der Länge *NB*, vier digitale Multiplizierer 807, 816, zwei digitale Addierer 808, 817, einen digitalen Negierer 809, zwei Waveform-Shaper-Memories 810, 811, einen digitalen Addierer 812, einen Digital-to-Analog-Converter 813, ein DAC-Filter 814 und einen Slicer 815 auf. Der Slicer 815 weist vorzugsweise zur Störunterdrückung eine Hysterese auf. Das DAC-Filter 814 ist z.B. ein passives LC-Filter hoher Ordnung. Die Sample-Rate (Takt) des "hetdds" entspricht der regenerierten Master-Bitclock *fB* 313.

Der Phasen-Accumulator 801 berechnet pro Master-Bitclock-Takt den Phasen-Wert neu zu *PA:=(PA+ZA) mod NA.* Der Wert PA dient direkt als Adresse für die Waveform-Memories 802 bzw. 803, welche genau *NA* Samples einer Cosinus- bzw. Sinus-Periode enthalten. Der Phasen-Accumulator 802 berechnet pro Master-Bitclodc-Takt den Phasen-Wert neu zu *PB:=(PB+ZB) mod NB.* Der Wert *PB* dient direkt als Adresse für die Waveform-Memories 804 bzw. 805, welche genau *NB* Samples einer Cosinus- bzw. Sinus-Periode enthalten.
Gemäß Additionstheorem erzeugen zwei Multiplizierer 808 zusammen mit dem Addierer 807 ein digitales Sinus-Signal der gewünschten Frequenz *fi*. Dieses Sinus-Signal wird mittels Waveform-Shaper-Memory 810 in ein gewünschtes , z.B. nicht-sinusförmiges Signal S übersetzt. Gemäß Additionstheorem erzeugen weiterhin zwei Multiplizierer 816 zusammen mit Negierer 809 und Addierer 8147 ein digitales Cosinus-Signal der gewünschten Frequenz *fi*. Dieses Cosinus-Signal wird mittels Waveform-Shaper-Memory 811 in ein weiteres, z.B. nicht-sinusförmiges Signal C übersetzt. Ein Addierer 812 bildet die Summe S+C beider nicht-sinusförmiger Signale der Frequenz *fi.*

Die Waveform-Shaper-Memories 810, 811 enthalten derartige Werte, dass die nicht-sinusförmige Summe S+C genau der gewünschten vorteilhaften erfindungsgemäßen nicht-sinusförmigen DDS-Waveform entsprechen, wie unter "scaledds" beschrieben. Falls der Waveform-Shaper 811 nicht benötigt wird, so entfallen auch die beiden Muliplizierer 816, der Addierer 817, der Negierer 809 und der Addierer 812. Der Phasenoffset *ϕ0* 315 wird realisiert durch *fB-*synchrones Laden eines definierten Phasenwertes in den Accumulator 801 und von Phase 0 in den Accumulator 802 bei Vorliegen von "reset phase" 314. Die zeitliche Auflösung *Δt* des wählbaren Phasenoffsets *ϕ0* 315 beträgt beim "hetdds" Prinzip *Δt=1*/*(NA*fi)=1*/*(ZA*fB).*

Die einzelnen Baugruppen 100 und 300 mit den entsprechenden Komponenten sind beispielsweise in ein Ton- und/oder Bildsignale verarbeitendes Gerät 120 integrierbar. Die ausgegebene Clock 312 ist in der Endbaugruppe 300 generierbar. Der Scheduler 102 kann auch eine direkte Adressierung eines Speichers 105 vornehmen. Damit wird das ausgelesene Bitmuster direkt in den Modulator 107 geleitet. In dem Gerät 120 können die Speicher 105, 306, 602, 705, 803, 804, 805, 806, 810 und 812 in einem Bauteil zusammengefasst werden.

### Bezugszeichenliste

- 100: Sender
- 101: Master-Bit-Clock-Signal
- 102: Scheduler-Logik
- 103: Frequenzteile
- 104: Bit-Adress-Generator
- 105: Bit-Muster-Speicher
- 106: Selektor
- 107: Modulator
- 108: Ausgangsinterface
- 109: Master-Reset
- 110: Frequenz-Referenz
- 111: Signal
- 112: Reset-Signal
- 113: End-Signal
- 114: ISEL-Signal
- 115: Multi-Clock-Taktsignal
- 300: Empfänger
- 302: Demodulator
- 303: PLL
- 304: Schieberegister
- 305: Musterdetektor
- 306: Muster
- 307: Vergleicher
- 308: Entscheider
- 309: Clock-Generator
- 310: Ausgangsinterface *fi*
- 311: Ausgangsinterface *fB*
- 312: fi
- 313: Master-Bit-Clock
- 314: Reset-Signal
- 315: Phasen-Offset
- 400: Teiler/Vervielfacher
- 401: Teiler
- 402: Vervielfacher
- 403: Filter
- 404: Frequenzteiler
- 500: PLL-Modul
- 501: Teiler
- 502: Komparator
- 503: Loop-Filter
- 504: VCO
- 505: Teiler
- 600: DDS-Modul
- 601: Phasenakkumulator
- 602: Wellenform-Speicher
- 603: D/A-Wandler
- 604: DAC-Filter
- 605: Slicer
- 700: Scale-DDS-Modul
- 701: Phasenakkumulator
- 702: Phasen-Multiplizierer
- 703: Addierer
- 704: Phasen-Verschieber
- 705: Wellenformspeicher
- 706: D/A-Konverter
- 707: DAC-Filter
- 708: Slicer
- 709: Look-up-Table
- 710: Phasen-Skalierer
- 800: Heterodyn-DDS-Modul
- 801: Phasenakkumulator
- 802: Phasenakkumulator
- 803: Kosinus-Wellenform-Speicher
- 804: Sinus-Wellenform-Speicher
- 805: Kosinus-Wellenform-Speicher
- 806: Sinus-Wellenform-Speicher
- 807: Multiplizierer
- 808: Addierer
- 809: Negierer
- 810: Wellenformspeicher
- 811: Wellenformspeicher
- 812: Addierer
- 813: D/A-Konverter
- 814: DAC-Filter
- 815: Slicer
- 816: Multiplizierer
- 817: Addierer
- 901: Sinussignal
- 902: Fourier-entwickelte modifizierte Rechteckfunktion
- 903: Fourier-entwickelte modifizierte Rechteckfunktion
- 904: Fourier-entwickelte modifizierte Rechteckfunktion
- 905: Fourier-entwickelte modifizierte Rechteckfunktion

## Patentansprüche

1. Verfahren zur Synchronisation von Taktsignalen zumindest zweier Empfänger (300) mittels einer Sendeeinheit (100), die mit beiden Empfängern zumindest unidirektional gekoppelt ist und die ein Übertragungssignal (115) an die zumindest beiden Empfänger (300) übermittelt, welches zumindest ein Master-Bit-Clock-Signal (101) und ein Bitmuster (312) aufweist, wobei die Empfänger (300) jeweils ein empfängerspezifisches Clock-Signal (312) aus dem Master-Bit-Clock-Signal erzeugen, **dadurch gekennzeichnet, dass** die Frequenz (*fi*) eines jeden Clock-Signals (312) und die Master-Bit-Clock-Frequenz (*fB*) in einem rationalen Verhältnis *fi =* (Zi/Ni) * *fB* zueinander stehen, Zi und Ni ganze Zahlen sind und für eine Gruppe von Clock-Frequenzen (*fi*) mit gemeinsamem Ni zumindest ein Bitmuster (*xi*) erzeugt und zu einer von einem Scheduler (102) vorgegebenen Zeit versendet wird, aus welchem die Empfänger (300) die Frequenz (*fi*) und/oder die Phase ihres jeweiligen Clock-Signals (312) eindeutig reproduzieren, wobei die Erzeugung und/oder das Versenden eines Ni-spezifischen Bitmusters (xi) durch einen gemeinsamen Phasen-Nulldurchgang wenigstens eines Clock-Signals (312) und des Master-Bit-Clock-Signals (101) getriggert wird.

2. Verfahren nach Anspruch 1, wobei das Master-Bit-Clock-Signal in Form einer selbsttaktenden Modulation in dem von der Sendeinheit (100) ausgesandten Übertragungs-Signal (115) enthalten ist.

3. Verfahren nach einem der vorhergehenden Ansprüche, wobei die Empfänger (300) ausschließlich das von der Sendeeinheit (100) erzeugte Übertragungs-Signal (115) erhalten.

4. Verfahren nach einem der vorhergehenden Ansprüche, wobei für wenigstens zwei vorgegebene Clock-Frequenzen (*fi1, fi2*) ein Ni durch Primfaktorzerlegung der Clock-Frequenzen (*fi1, fi2)* berechnet wird.

5. Verfahren nach einem der vorhergehenden Ansprüche, wobei auf einem einzigen, die Sendeeinheit (100) mit sämtlichen Empfängern (300) koppelnden Übertragungskanal verschiedene, jeweils *mit* einem gesonderten Ni versehene Gruppen von Bitmustern übe*rt*ragen werden, wobei das Versenden unterschiedlicher jeweils Ni-spezifischer Bitmuster (*xi*) selbsttätig von der Sendeeinheit (100) getriggert wird.

6. Sendeeinheit zur Synchronisation von Taktsignalen zumindest zweier Empfänger (300), wobei die Sendeeinheit mit beiden Empfängern (300) zumindest unidirektional koppelbar ist und zur Übermittlung eines Übertragungssignals (115) an die zumindest beiden Empfänger (300) ausgebildet ist, welches Übertragungssignal zumindest ein Master-Bit-Clock-Signal (101) und ein Bitmuster (312) aufweist, wobei von den Empfängern (300) jeweils ein empfängerspezifisches Clock-Signal (312) aus dem Master-Bit-clock-Signal erzeugbar ist, **dadurch gekennzeichnet, dass** die Frequenz (*fi*) eines jeden Clock-Signals (312) und die Master-Bit-Clock-Frequenz (*fB*) in einem rationalen Verhältnis *fi =* (Zi/Ni) * *fB* zueinander stehen, Zi und Ni ganze Zahlen sind und die Sendeeinheit dazu ausgebildet ist, für eine Gruppe von Clock-Frequenzen (*fi*) mit gemeinsamem Ni zumindest ein Bitmuster (*xi*) zu erzeugen und zu einer von einem Scheduler (102) vorgegebenen Zeit zu versenden, aus welchem die Empfänger (300) die Frequenz (*fi*) und/oder die Phase ihres jeweiligen Clock-Signals (312) eindeutig reproduzieren können, wobei die Erzeugung und/oder das Versenden eines Ni-spezifischen Bitmusters (xi) durch einen gemeinsamen Phasen-Nulldurchgang wenigstens eines Clock-Signals (312) und des Master-Bit-Clock-Signals (101) getriggert wird.

7. Sendeeinheit nach Anspruch 6, welche die Erzeugung und/oder das Versenden eines Bitmusters (*xi*) selbsttätig triggert.

8. Sendeeinheit nach einem der vorhergehenden Ansprüche 6 oder 7, die ferner dazu ausgebildet ist, mehrere jeweils für unterschiedliche Ni vorgesehene Bitmuster (*xi*) zeitlich versetzt zueinander zu versenden und/oder nach Arbitrationslogik das Versenden eines Bitmusters zugunsten eines anderen Bitmusters unterbricht.

9. Sendeinheit nach einem der vorhergehenden Ansprüche 6 bis 8, ferner mit einem Speichermodul zum Abspeichern eines eine Sequenz an Bitmustern (*xi*) aufweisenden Übertragungs-Signals (115) und/oder zum Abspeichern einer eindeutigen Information zur Rekonstruktion des Übertragungs-Signals (115), und mit einem Wiedergabemodul, welches zum periodisch wiederkehrenden Abspielen des gespeicherten Übertragungs-Signals (115) zur Erzeugung und zum Senden des Übertragungssignals (115) an die zumindest zwei Empfänger (300) ausgebildet ist.

10. Empfänger mit Empfangsmitteln zum Empfang zumindest eines von einer Sendeeinheit nach einem der Ansprüche 6 bis 9 erzeugten Übertragungs-Signals (115) und mit zumindest einem PLL- und/oder DDS-Modul (303; 500; 600; 700; 800) zur lokalen Erzeugung des Master-Bit-Clock-Signals (101) aus dem Übertragungs-Signal (115) und mit einem Clock-Generator-Modul (309) zur lokalen Erzeugung des Clock-Signals (312) der Frequenz fi, aus dem Übertragungs-Signal (115) und wobei zumindest ein Modul (309) als Teiler- und/oder als Vervielfacher- und/oder als PLL- und/oder DDS-Modul (400; 500; 600; 700; 800) ausgebildet ist, **dadurch gekennzeichnet, dass** der Empfänger dazu ausgebildet ist, sowohl ein Master-Bit-Clock-Signal (101) als auch ein Clock-Frequenz-spezifisches Bitmuster (*xi*) von einer Sendeeinheit (100) zu empfangen und entsprechend der über das Bitmuster (*xi*) übermittelten Daten ein Empfänger-spezifisches Clock-Signal (312) zu erzeugen, dessen Frequenz (*fi*) in einem rationalen Verhältnis zur Frequenz des Master-Bit-Clock-Signals (101) und/oder dessen Phase in einer definierten oder vorgegebenen Phasen-Beziehung zum Master-Bit-Clock-Signal (101) steht.

11. Synchronisationseinrichtung mit einer Sendeeinheit (100) nach einem der Ansprüche 6 bis 9 und mit wenigstens zwei hiermit jeweils unidirektional gekoppelten Empfängern (300) nach Anspruch 10, wobei die Sendeeinheit (100) zum Senden eines von sämtlichen Empfängern (300) zu empfangenden, ein Master-Bit-Clock-Signal (101) aufweisenden Übertragungs-Signals (115) und zum Senden wenigstens eines Bitmusters (*xi*) ausgebildet ist, aus welchem seitens der Empfänger (300) ein Empfänger-spezifisches Clock-Signal (312) generierbar ist, **dadurch gekennzeichnet, dass** die Frequenzen (*fi1, fi2*) der Clock-Signale (312) der zumindest zwei Empfänger (300) in einem rationalen Verhältnis *fi*=(Zi/Ni) * *fB* zueinander stehen, mit *fB* als Frequenz des Master-Bit-Clock-Signals (101) und Zi sowie Ni als ganzen Zahlen, wobei das wenigstens eine Bitmuster (*xi*) jeweils einer Gruppe von Clock-Signalen (312) gleicher oder unterschiedlicher Clock-Frequenz (*fi1, fi2*) aber gleichem Ni zugeordnet ist und die zumindest zwei Empfänger (300) die Frequenz und/oder die Phase ihres jeweils zugeordneten Clock-Signals (312) eindeutig lokal reproduzieren, wobei die Erzeugung und/oder das Versenden eines Ni-spezifischen Bitmusters (xi) durch einen gemeinsamen Phasen-Nulldurchgang wenigstens eines Clock-Signals (312) und des Master-Bit-Clock-Signals (101) durch einen Scheduler (102) getriggert wird.

12. Synchronisationseinrichtung nach Anspruch 11, wobei das Master-Bit-Clock-Signal (101) als selbstgetaktete Modulation des seriellen Übertragungs-Signals (115) ausgebildet ist.

13. Synchronisationseinrichtung nach einem der vorhergehenden Ansprüche 11 oder 12, wobei jeder Empfänger (300) nach Empfang und/oder Verarbeitung eines für ihn vorgesehenen Bitmusters (*xi*) ein mit dem Master-Bit-Clock-Signal (101) frequenz- und/oder phasengekoppeltes Clock-Signal (312) aufweist.

## Claims

1. Method for synchronizing clock signals of at least two receivers (300) by means of a transmission unit (100) that is at least unidirectionally coupled to both receivers and that transmits a transmission signal (115) to the at least two receivers (300), which transmission signal has at least a master bit clock signal (101) and a bit pattern (312), wherein the receivers (300) each produce a receiver-specific clock signal (312) from the master bit clock signal, **characterized in that** the frequency (fi) of each clock signal (312) and the master bit clock frequency (fB) are in a rational ratio fi = (Zi/Ni) * fB in relation to one another, Zi and Ni are integers and, for a group of clock frequencies (fi) with a common Ni, at least one bit pattern (xi) is produced and is sent at a time prescribed by a scheduler (102), from which bit pattern the receivers (300) explicitly reproduce the frequency (fi) and/or the phase of their respective clock signal (312), wherein the production and/or the sending of an Ni-specific bit pattern (xi) is triggered by a common phase zero crossing of at least one clock signal (312) and of the master bit clock signal (101).

2. Method according to Claim 1, wherein the master bit clock signal is included in the form of a self-clocking modulation in the transmission signal (115) transmitted by the transmission unit (100).

3. Method according to either of the preceding claims, wherein the receivers (300) obtain exclusively the transmission signal (115) produced by the transmission unit (100).

4. Method according to one of the preceding claims, wherein an Ni is computed for at least two prescribed clock frequencies (fi1, fi2) by prime factor breakdown of the clock frequencies (fi1, fi2).

5. Method according to one of the preceding claims, wherein different groups of bit patterns, which groups are each provided with a separate Ni, are transmitted on a single transmission channel coupling the transmission unit (100) to all of the receivers (300), wherein the sending of different, respectively Ni-specific bit patterns (xi) is triggered automatically by the transmission unit (100).

6. Transmission unit for synchronizing clock signals of at least two receivers (300), wherein the transmission unit is at least unidirectionally couplable to both receivers (300) and is designed to transmit a transmission signal (115) to the at least two receivers (300), which transmission signal has at least a master bit clock signal (101) and a bit pattern (312), wherein the receivers (300) can each produce a receiver-specific clock signal (312) from the master bit clock signal, **characterized in that** the frequency (fi) of each clock signal (312) and the master bit clock frequency (fB) are in a rational ratio fi = (Zi/Ni) * fB in relation to one another, Zi and Ni are integers and the transmission unit is designed to produce, for a group of clock frequencies (fi) with a common Ni, at least one bit pattern (xi) and to send said bit pattern at a time prescribed by a scheduler (102), from which bit pattern the receivers (300) can explicitly reproduce the frequency (fi) and/or the phase of their respective clock signal (312), wherein the production and/or the sending of an Ni-specific bit pattern (xi) is triggered by a common phase zero crossing of at least one clock signal (312) and of the master bit clock signal (101).

7. Transmission unit according to Claim 6, which automatically triggers the production and/or the sending of a bit pattern (xi).

8. Transmission unit according to either of the preceding Claims 6 and 7, which is additionally designed to send multiple bit patterns (xi), which are each provided for different Ni, at staggered times and/or takes arbitration logic as a basis for interrupting the sending of one bit pattern in favour of another bit pattern.

9. Transmission unit according to one of the preceding Claims 6 to 8, additionally having a memory module for storing a transmission signal (115) that has a sequence of bit patterns (xi) and/or for storing an explicit piece of information pertaining to the reconstruction of the transmission signal (115), and having a reproduction module that is designed to periodically recurrently play the stored transmission signal (115) in order to produce and send the transmission signal (115) to the at least two receivers (300).

10. Receiver having reception means for receiving at least one transmission signal (115) produced by a transmission unit according to one of Claims 6 to 9 and having at least one PLL and/or DDS module (303; 500; 600; 700; 800) for locally producing the master bit clock signal (101) from the transmission signal (115) and having a clock generator module (309) for locally producing the clock signal (312) having the frequency fi from the transmission signal (115) and wherein at least one module (309) is in the form of a division module and/or in the form of a multiplication module and/or in the form of a PLL and/or DDS module (400; 500; 600; 700; 800), **characterized in that** the receiver is designed to receive both a master bit clock signal (101) and a clock-frequency-specific bit pattern (xi) from a transmission unit (100) and, in accordance with the data transmitted via the bit pattern (xi), to produce a receiver-specific clock signal (312) whose frequency (fi) is in a rational ratio in relation to the frequency of the master bit clock signal (101) and/or whose phase is in a defined or prescribed phase relationship with the master bit clock signal (101).

11. Synchronization device having a transmission unit (100) according to one of Claims 6 to 9 and having at least two receivers (300) according to Claim 10 that are each unidirectionally coupled thereto, wherein the transmission unit (100) is designed to send a transmission signal (115) that can be received by all of the receivers (300) and that has a master bit clock signal (101) and to send at least one bit pattern (xi) from which a receiver-specific clock signal (312) can be generated by the receivers (300), **characterized in that** the frequencies (fi1, fi2) of the clock signals (312) of the at least two receivers (300) are in a rational ratio fi = (Zi/Ni) * fB in relation to one another, with fB as the frequency of the master bit clock signal (101) and Zi and Ni as integers, wherein the at least one bit pattern (xi) is associated in each case with a group of clock signals (312) having the same or a different clock frequency (fi1, fi2) but the same Ni and the at least two receivers (300) explicitly locally reproduce the frequency and/or the phase of their respective associated clock signal (312), the production and/or the sending of an Ni-specific bit pattern (xi) being triggered by a common phase zero crossing of at least one clock signal (312) and of the master bit clock signal (101) by a scheduler (102).

12. Synchronization device according to Claim 11, wherein the master bit clock signal (101) is in the form of a self-clocked modulation of the serial transmission signal (115).

13. Synchronization device according to either of the preceding Claims 11 and 12, wherein each receiver (300), following reception and/or processing of a bit pattern (xi) provided therefor, has a clock signal (312) that is frequency- and/or phase-coupled to the master bit clock signal (101).

## Revendications

1. Procédé de synchronisation de signaux d'horloge d'au moins deux récepteurs (300) au moyen d'une unité d'émission (100) qui est couplée aux deux récepteurs de manière au moins unidirectionnelle et qui transmet aux au moins deux récepteurs (300) un signal de transmission (115) comprenant au moins un signal d'horloge binaire maître (101) et une configuration binaire (312), dans lequel les récepteurs (300) génèrent respectivement un signal d'horloge (312) spécifique du récepteur à partir du signal d'horloge binaire maître, **caractérisé en ce que** la fréquence (fi) de chaque signal d'horloge (312) et la fréquence d'horloge binaire maîtresse (fB) présentent un rapport rationnel *fi* = (Zi/Ni)**fB* l'un par rapport à l'autre, Zi et Ni sont des nombres entiers et, pour un groupe de fréquences d'horloge (fi) ayant un Ni commun, une configuration binaire (xi) est générée et est émise à un instant prédéterminé par un planificateur (102), configuration binaire à partir de laquelle les récepteurs (300) reproduisent de manière unique la fréquence (fi) et/ou la phase de leur signal d'horloge respectif (312), dans lequel la génération et/ou l'émission d'une configuration binaire (xi) spécifique du Ni est déclenchée par un passage à zéro commun des phases d'au moins un signal d'horloge (312) et du signal d'horloge binaire maître (101).

2. Procédé selon la revendication 1, dans lequel le signal d'horloge binaire maître est contenu sous la forme d'une modulation auto-cadencée dans le signal de transmission (115) émis par l'unité d'émission (100).

3. Procédé selon l'une quelconque des revendications précédentes, dans lequel les récepteurs (300) obtiennent exclusivement le signal de transmission (115) généré par l'unité d'émission (100).

4. Procédé selon l'une quelconque des revendications précédentes, dans lequel, pour au moins deux fréquences d'horloge prédéterminées (*fi1, fi2*)*,* un Ni est calculé par décomposition en produit de facteurs premiers des fréquences d'horloge (*fi1, fi2*)*.*

5. Procédé selon l'une quelconque des revendications précédentes, dans lequel différents groupes de configurations binaires auxquelles est respectivement affecté un Ni distinct sont transmis sur un canal de transmission unique couplant l'unité d'émission (100) à l'ensemble des récepteurs (300), dans lequel l'émission de configurations binaires respectives (xi) différentes spécifiques du Ni est automatiquement déclenchée par l'unité d'émission (100).

6. Unité d'émission destinée à synchroniser des signaux d'horloge d'au moins deux récepteurs (300), dans laquelle l'unité d'émission peut être couplée de manière au moins unidirectionnelle aux deux récepteurs (300) et est conçue pour transmettre aux au moins deux récepteurs (300) un signal de transmission (115) comprenant au moins un signal d'horloge binaire maître (101) et une configuration binaire (312), dans laquelle un signal d'horloge (312) spécifique du récepteur peut respectivement être généré à partir du signal d'horloge binaire maître par les récepteurs (300), **caractérisé en ce que** la fréquence (*fi*) de chaque signal d'horloge (312) et la fréquence d'horloge binaire maîtresse (*fB*) présentent un rapport rationnel *fi* = (Zi/Ni)**fB* l'un par rapport à l'autre, Zi et Ni sont des nombres entiers et l'unité d'émission est conçue pour générer au moins une configuration binaire (*xi*) pour un groupe de fréquences d'horloge (*fi*) ayant un Ni commun, et pour l'émettre à un instant prédéterminé par un planificateur (102), configuration binaire à partir de laquelle les récepteurs (300) peuvent reproduire de manière unique la fréquence (*fi*) et/ou la phase de leur signal d'horloge respectif (312), dans laquelle la génération et/ou l'émission d'une configuration binaire (xi) spécifique du Ni est déclenchée par un passage à zéro commun des phases d'au moins un signal d'horloge (312) et du signal d'horloge binaire maître (101).

7. Unité d'émission selon la revendication 6, qui déclenche automatiquement la génération et/ou l'émission d'une configuration binaire (*xi*).

8. Unité d'émission selon l'une quelconque des revendications 6 ou 7, qui est en outre conçue pour émettre de manière décalée temporellement les unes par rapport aux autres une pluralité de configurations binaires respectives (*xi*) prévues pour des Ni différents et/ou qui interrompt conformément à une logique d'arbitrage l'émission d'une configuration binaire en faveur d'une autre configuration binaire.

9. Unité d'émission selon l'une quelconque des revendications 6 à 8 précédentes, comportant en outre un module à mémoire destiné à stocker un signal de transmission (115) comprenant une séquence de configurations binaires (*xi*) et/ou pour stocker une information unique destinée à la reconstruction du signal de transmission (115), et comportant un module de restitution qui est conçu pour générer le signal de transmission (115) à des fins de reproduction et répétée périodiquement du signal de transmission (115) stocké, et pour l'envoyer aux au moins deux récepteurs (300).

10. Récepteur comportant des moyens de réception destinés à recevoir au moins un signal de transmission (115) généré par une unité d'émission selon l'une quelconque des revendications 6 à 9 et comportant au moins un module à PLL et/ou à DDS (303 ; 500 ; 600 ; 700 ; 800) destiné à générer localement le signal d'horloge binaire maître (101) à partir du signal de transmission (115) et comportant un module générateur d'horloge (309) destiné à générer localement le signal d'horloge (312) de fréquence *fi* à partir du signal de transmission (115) et dans lequel au moins un module (309) est réalisé sous la forme d'un module diviseur et/ou multiplicateur et/ou à PLL et/ou à DDS (400 ; 500 ; 600 ; 700 ; 800), **caractérisé en ce que** le récepteur est conçu pour recevoir non seulement un signal d'horloge binaire maître (101) mais également une configuration binaire (xi) spécifique de la fréquence d'horloge d'une unité d'émission (100) et pour générer un signal d'horloge (312) spécifique du récepteur d'une manière qui correspond aux données transmises par l'intermédiaire de la configuration binaire (*xi*), signal d'horloge dont la fréquence (*fi*) présente un rapport rationnel à la fréquence du signal d'horloge binaire maître (101) et/ou dont la phase présente une relation de phase définie ou prédéterminée par rapport au signal d'horloge binaire maître (101).

11. Dispositif de synchronisation comportant une unité d'émission (100) selon l'une quelconque des revendications 6 à 9, et comportant au moins deux récepteurs (300) selon la revendication 10, respectivement couplés à celle-ci de manière unidirectionnelle, dans lequel l'unité d'émission (100) est conçue pour émettre un signal de transmission (115) comprenant un signal d'horloge binaire maître (101) devant être reçu par l'ensemble des récepteurs (300) et pour émettre au moins une configuration binaire (xi) à partir de laquelle un signal d'horloge (312) spécifique du récepteur peut être généré côté récepteur (300), **caractérisé en ce que** les fréquences (*fi1, fi2*) des signaux d'horloge (312) des au moins deux récepteurs (300) présentent un rapport rationnel *fi* = (Zi/Ni)**fB*, où *fB* est la fréquence du signal d'horloge binaire maître (101) et Zi et Ni sont des nombres entiers, dans lequel l'au moins une configuration binaire (xi) est respectivement associée à un groupe de signaux d'horloge (312) ayant des fréquences d'horloge (*fil, fi2*) identiques ou différentes mais de même Ni et les au moins deux récepteurs (300) reproduisent localement de manière unique la fréquence et/ou la phase du signal d'horloge qui leur est respectivement associé (312), dans laquelle la génération et/ou l'émission d'une configuration binaire (*xi*) spécifique du Ni est déclenchée par un planificateur (102) par un passage à zéro commun des phases d'un signal d'horloge (312) et du signal d'horloge binaire maître (101).

12. Dispositif de synchronisation selon la revendication 11, dans lequel le signal d'horloge binaire maître (101) est réalisé sous la forme d'une modulation auto-cadencée du signal de transmission série (115).

13. Dispositif de synchronisation selon l'une quelconque des revendications 11 ou 12 précédentes, dans lequel chaque récepteur (300) comprend, après réception et/ou le traitement d'une configuration binaire (*xi*) qui lui est associée, un signal d'horloge (312) couplé en fréquence et/ou en phase au signal d'horloge binaire maître (101).
